# EUROPEAN PATENT SPECIFICATION

(11) **EP 3 214 514 B1**
(45) Date of publication and mention of the grant of the patent: **11.09.2019**
(21) Application number: 14905019.7
(22) Date of filing: 27.10.2014
(51) Int. Cl.: G05B 19/409

(54) **MACHINE TOOL CONTROL METHOD AND MACHINE TOOL CONTROL DEVICE**
MASCHINENWERKZEUGSTEUERUNGSVERFAHREN UND MASCHINENWERKZEUGSTEUERUNGSVORRICHTUNG
PROCÉDÉ DE COMMANDE DE MACHINE-OUTIL ET DISPOSITIF DE COMMANDE DE MACHINE-OUTIL

(43) Date of publication of application: 06.09.2017
(73) Proprietor: Makino Milling Machine Co., Ltd., Tokyo 152-8578 (JP)
(72) Inventor: HOSHINO, Yoshihiro, Aiko-gun Kanagawa 243-0303 (JP); ISHII, Kazunari, Aiko-gun Kanagawa 243-0303 (JP); KAWAI, Rie, Aiko-gun Kanagawa 243-0303 (JP); UNNO, Takahiro, Aiko-gun Kanagawa 243-0303 (JP); STANCU, Alexandra Florentina, Aiko-gun Kanagawa 243-0303 (JP)
(74) Representative: McWilliams, David John
(86) International application number: PCT/JP2014/078519
(87) International publication number: WO 2016/067342

(56) References cited:
- WO-A1-2012/105026
- WO-A1-2014/062010
- JP-A- 2006 350 602
- US-A1- 2012 265 330

## Description

### Technical Field

The present invention relates to a control method for a machine tool and a control apparatus for the machine tool.

### Background Art

In a conventional technique, machine tools are known that move tools relative to workpieces in order to perform machining such as cutting. In addition, among such machine tools, a machine tool of a numerical control type that designates a path of the tool on the basis of coordinates or the like of a predetermined feed axis and performs machining while moving the tool with respect to the workpiece is known. By moving at least one of the workpiece and the tool according to an operation command from a control apparatus, the machine tool can automatically perform machining while changing a relative position of the tool with respect to the workpiece.

In the machine tool of the numerical control type, a machining program in which the relative movement of the tool with respect to the workpiece is set, tool information, and the like is inputted to the control apparatus. The machine tool can automatically perform machining of the workpiece on the basis of such information. An operator needs to set or check information on machining such as the machining program. A display part that displays the information on machining is arranged in the machine tool. The operator can set information on the tool and check a progress status of the machining while watching the display part.

The machine tool of the numerical control type may also be driven manually. For example, when performing replacement of the tool, the workpiece or the tool may be manually moved in order to keep a main spindle head to which the tool is fixed away from the workpiece. In this case, the operator can manually drive the machine tool by driving the feed axis by means of using a jog button or a manual pulse generator while watching the machine tool, or by creating and executing a machining program on the spot by means of using a manual data input (MDI) function.

Japanese Patent No. 5391675B discloses a control apparatus that divides a series of operation performed at the time of automatic operation of a machine tool into individual operations, and displays operation order in a three-dimensional shape model. The control apparatus displays menus for operating parts corresponding to the three-dimensional shape model. When any of the displayed menus is selected, it is disclosed that the control apparatus executes operation corresponding to the selected menu.

Japanese Unexamined Patent Publication No. 2000-305614A discloses a control apparatus that can generate manual pulses by software. The control apparatus includes a touch panel on which an input operation part for a manual operation is displayed. A plurality of touch switches are displayed on the input operation part that is formed such that an input operation can be continuously performed by tracing the touch switches by a finger. It is disclosed that the control apparatus gives a movement command to a servo mechanism of a machine according to the operation of the input operation part.

### Citation List

### Patent Literature

Patent Literature 1: Japanese Patent No. 5391675
Patent Literature 2: Japanese Unexamined Patent Publication No. 2000-305614A

A virtual machine tool for representing actions of machining units and generating operating data from a user input is described in US 2012/0265330 A1.

### Summary of Invention

### Technical Problem

In recent years, a progress has been made in machine tool technique, and now the machine tool is provided with many functions. Along with the increase of machine tool functions, the machine tool operation has become complex and difficult. In addition, even when the functions and the operation method of one machine tool are fully posted, the type of the machine tool may be changed, or the machine tool may be changed to a machine tool made by a different manufacturer. In such a case, the functions and the operation method needs to be learned again in order to master the machine tool.

For example, feed axes such as the X axis and the Y axis are set in the machine tool. The directions of a positive side and a negative side are set for each feed axis. When the workpiece or the tool is manually moved, the workpiece or the tool can be moved along a desired feed axis by pressing the jog button on an operation panel. At this time, the operator needs to select a feed axis to be moved, and further select the positive side or the negative side. However, when the type of the machine tool changes, it is difficult for the operator to identify a feed axis or a direction of a movement in order to perform desired movement. When a feed axis or the direction of the movement is erroneously selected, the machine tool may be driven in an unintended direction so as to cause malfunction. For example, when the tool is separated from the workpiece, the machine tool may be driven in a direction opposite to a desired direction and the tool may collide with the workpiece. Thus, the operator needs to operate the switches on the operation panel while referring to the operation manual of the machine tool or the nameplate of the feed axis of the machine.

In a machine tool having a rotation feed axis, a machining surface of the workpiece may be directed to the tool by a rotation movement. In this case, a machining program for moving along the rotation feed axis is generated by the MDI function. However, in the machining program including rotation operation, a rotation feed axis needs to be selected, and further a rotation angle of the rotation feed axis needs to be set.

In addition, the machine tool may include an auxiliary apparatus such as a tool replacement apparatus or a cooling liquid supply apparatus. When controlling such an auxiliary apparatus, a machining program for driving the auxiliary apparatus also needs to be generated.

It is necessary to describe command codes in the machining program. Arguments need to be set in the command codes. There are many types of command codes, and it is difficult to memorize all the command codes. A machining program needs to be generated only for directing the machining surface of the workpiece to the tool or driving the auxiliary apparatus, and a high level of knowledge and skill are required for the operator.

The present invention has an object to provide a control method for a machine tool and a control apparatus for the machine tool, which facilitate an operation of the machine tool and suppress an erroneous operation of the operator.

### Solution to Problem

A control method for a machine tool according to the present invention is defined in claim 1.

In the above invention, the image of the machine tool displayed on the display part can be a three-dimensional image.

In the above invention, when a part of the image of the machine tool is moved while maintaining a selected state by the operator, a feed axis and a movement amount corresponding to a movement direction in the image of the machine tool can be set, and the operation command can be generated on the basis of the movement amount in the feed axis.

In the above invention, an image of an auxiliary apparatus of the machine tool can be displayed on the display part, the content of the operation can be an operation with respect to the image of the auxiliary apparatus, the operation command can be a command for operating the auxiliary apparatus, and the auxiliary apparatus can be operated on the basis of the operation command.

A control apparatus for a machine tool according to the present invention is defined in claim 5. Advantageous Effects of Invention

According to the present invention, the control method for the machine tool and the control apparatus for the machine tool can be provided, that enable the machine tool to be intuitively and easily operated in place of the operation by using the conventional jog button or manual pulse generator, and the erroneous operation of the operator to be suppressed.

### Brief Description of Drawings

FIG. 1 is a block diagram of a machine tool.
FIG. 2 is a schematic perspective view of the machine tool.
FIG. 3 is a schematic front view of an operation panel of the machine tool.
FIG. 4 is an explanatory diagram for calibrating a position of a workpiece.
FIG. 5 is a schematic perspective view of the workpiece and a touch probe for illustrating a method for measuring the position of the workpiece.
FIG. 6 is a flowchart for calibrating the position of the workpiece.
FIG. 7 is first manual operation screen displayed on a display panel of an operation panel.
FIG. 8 is second manual operation screen displayed on the display panel of the operation panel.
FIG. 9 is third manual operation screen displayed on the display panel of the operation panel.
FIG. 10 is a flowchart of control for driving the machine tool according to an operation of an image of the machine tool.
FIG. 11 is fourth manual operation screen displayed on the display panel of the operation panel.
FIG. 12 is fifth manual operation screen displayed on the display panel of the operation panel.
FIG. 13 is sixth manual operation screen displayed on the display panel of the operation panel.
FIG. 14 is seventh manual operation screen displayed on the display panel of the operation panel.
FIG. 15 is a flowchart of control for starting or stopping an auxiliary apparatus according to the operation of the image of the auxiliary apparatus.
FIG. 16 is first program edit screen displayed on the display panel of the operation panel.
FIG. 17 is a flowchart of first control on the program edit screen.
FIG. 18 is second program edit screen displayed on the display panel of the operation panel.
FIG. 19 is a flowchart of second control on the program edit screen.
FIG. 20 is a diagnosis screen displayed on the display panel of the operation panel.
FIG. 21 is a flowchart of control for displaying an abnormality of the machine tool in an image.

### Description of Embodiments

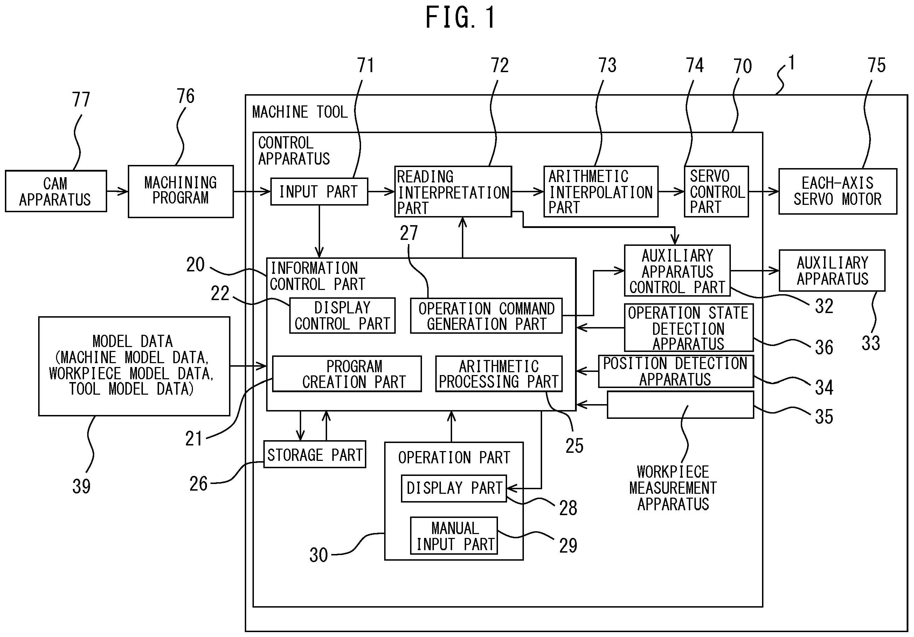

Referring to FIGS. 1 to 21, a control method for a machine tool and a control apparatus for the machine tool in an embodiment will be described. The machine tool according to the present embodiment is a numerical control type that automatically performs machining on the basis of a machining program by moving a tool relative to the workpiece.

FIG. 1 shows a block diagram of the machine tool in the present embodiment. The machine tool 1 includes a control apparatus 70. The control apparatus 70 includes, for example, a CPU (Central Processing Unit), a RAM (Random Access Memory), and a ROM (Read Only Memory) interconnected via a bus. The control apparatus 70 includes an input part 71, a reading interpretation part 72, an arithmetic interpolation part 73, and a servo control part 74. When machining by the machine tool 1, a machining program 76 is prepared in advance. The machining program 76 can be created by a CAM (Computer Aided Manufacturing) apparatus 77 or the like on the basis of a target shape of the workpiece. The target shape of the workpiece can be created by, for example, a CAD (Computer Aided Design) apparatus.

The machining program 76 is inputted to the input part 71. The machining program 76 includes information on a relative movement of the tool with respect to the workpiece and information on control of an auxiliary apparatus. In the machining program 76, for example, an operation command to the machine tool is described by a command code such as a G code or an M code. Note that a machining program newly created by an operator in an information control part 20 may be inputted to the input part 71.

The reading interpretation part 72 reads the machining program 76 from the input part 71. The reading interpretation part 72 transmits a movement command to the arithmetic interpolation part 73. The arithmetic interpolation part 73 calculates a position command value for each interpolation period. For example, the arithmetic interpolation part 73 calculates a movement amount for each time interval set on the basis of the movement command. The arithmetic interpolation part 73 transmits the position command value to the servo control part 74. The servo control part 74 drives a servo motor 75 of each feed axis such as X axis, Y axis, Z axis or A axis on the basis of the position command value.

The control apparatus 70 includes the information control part 20 that controls machining information relating to machining of the workpiece, an operation part 30 that is used by the operator in order to input the machining information or the like, and a display part 28 that displays the machining information. The information control part 20 includes an arithmetic processing part 25 that calculates or determines a predetermined variable on the basis of the machining information.

The information control part 20 includes a program creation part 21. The program creation part 21 can create a numerical control program. The program creation part 21 creates a new machining program or edits the machining program after the machining program 76 is read from the input part 71. In addition, the program creation part 21 can create a movement program for driving a movement apparatus of each feed axis or the auxiliary apparatus, and a measurement program for performing measurement of the workpiece or the like on the basis of an operation of the operator with respect to a screen as described below. The information control part 20 includes a display control part 22 that controls an image displayed on the display part 28.

The operation part 30 includes a manual input part 29 that includes a keyboard or the like for inputting the machining information by the manual operation of the operator. The operation part 30 according to the present embodiment includes the display part 28. For the display part 28, a touch panel type that enables selection of a desired part by touching a screen is employed. The operator can input the machining information by operating an image displayed on the display part 28. The operation part 30 is not limited to this form, but an arbitrary apparatus that enables the operator to input the machining information can be employed.

The control apparatus 70 includes a storage part 26 that stores the machining information. The storage part 26 may be a storage apparatus such as a memory card or a hard disk coupled via a communication interface, in addition to the abovementioned ROM or RAM. The information control part 20 stores the machining information in the storage part 26, or reads the machining information stored in the storage part 26.

The control apparatus 70 includes an operation state detection apparatus 36 that detects the operation state of the machine tool. The operation state detection apparatus 36 may be exemplified by a sensor fitted to the machine tool 1. Various sensors may be exemplified by a sensor fitted to an each-axis servo motor 75 for detecting a rotation speed, a sensor that detects a load of a main spindle, and a sensor that detects the operation state of the auxiliary apparatus or the like. The arithmetic processing part 25 can determine the presence or absence of an abnormality of the operation state by receiving a signal from the operation state detection apparatus 36. For example, the arithmetic processing part 25 obtains the load of the main spindle from the operation state detection apparatus 36, and can determine that an abnormality occurs when the load of the main spindle is larger than a determination value.

The control apparatus 70 includes a position detection apparatus 34 that detects a position of each feed axis. The position detection apparatus 34 includes, for example, a linear encoder or a rotary encoder. The position detection apparatus 34 detects a coordinate value of each feed axis. The arithmetic processing part 25 obtains the coordinate value of each feed axis from the position detection apparatus 34.

The control apparatus 70 includes a work measurement apparatus 35 that measures a shape of the workpiece before machining or the shape of the workpiece after machining. The work measurement apparatus 35 includes, for example, a touch probe 19. The arithmetic processing part 25 detects contact with a workpiece W when the touch probe 19 moves. For example, the arithmetic processing part 25 can calculate the size of the workpiece W by obtaining a coordinate value when the touch probe 19 comes into contact with the workpiece W.

The machine tool 1 includes an auxiliary apparatus 33 that assists machining of the workpiece. The auxiliary apparatus 33 may be exemplified by a tool replacement apparatus that automatically replaces a tool, a work replacement apparatus that automatically replaces the workpiece, a cooling liquid supply apparatus that supplies a cooling liquid to the machining part of the workpiece, a chip conveyor, and the like that conveys chips generated at the time of machining.

An information control part 20 includes an operation command generation part 27 that outputs an operation command for driving the auxiliary apparatus 33. The control apparatus 70 includes an auxiliary apparatus control part 32 that includes a driving circuit for driving the auxiliary apparatus 33. The auxiliary apparatus control part 32 operates the auxiliary apparatus 33 on the basis of an operation command from a reading interpretation part 72 or the operation command generation part 27.

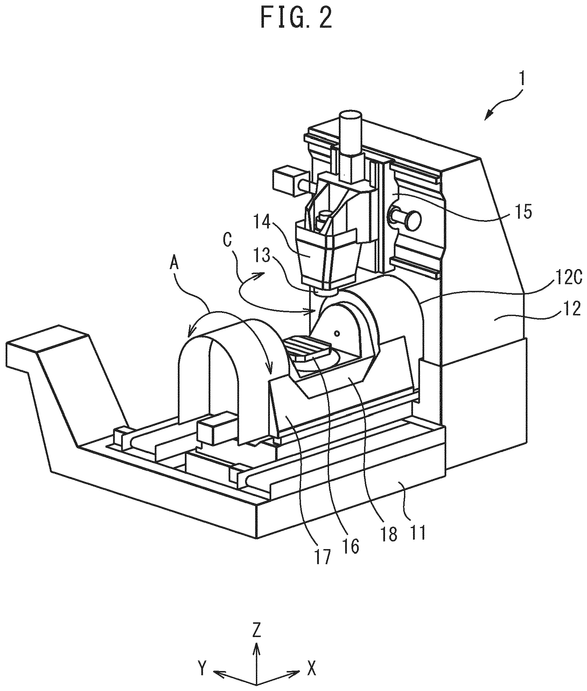

FIG. 2 shows a schematic perspective view of the machine tool in the present embodiment. The machine tool 1 is a table turning type that turns the workpiece together with a table 16. X axis, Y axis, and Z axis orthogonal to one another are set in the machine tool 1. In addition, in the machine tool 1, A axis is set as a rotation feed axis around an axis which extends in parallel to the X axis. In the machine tool 1, C axis is set as a rotation feed axis around the axis which extends in parallel to the Z axis.

The machine tool 1 includes a bed 11 that is a base, and a column 12 erected on the upper surface of the bed 11. The machine tool 1 includes a main spindle head 14 that rotatably supports a main spindle 13, and a saddle 15 that supports the main spindle head 14 in front of the column 12. The main spindle head 14 supports the main spindle 13 downward so that a tip of the main spindle 13 may be opposed to the table 16. A tool is mounted to the tip of the main spindle 13.

The machine tool 1 includes the table 16 on which the workpiece is arranged, and a swing support member 18 in a U-shape that supports the table 16. The machine tool 1 includes a carriage 17 in a U-shape that supports the swing support member 18. The carriage 17 supports the swing support member 18 by a pair of struts separated from each other in the direction of the X axis. The swing support member 18 is supported so as to swing around an axis line of the A axis.

The machined tool 1 includes a movement apparatus that moves the tool relative to the workpiece on the basis of each feed axis. The movement apparatus includes the each-axis servo motor 75 that drives along each feed axis. The movement apparatus moves the saddle 15 in the direction of the Y axis with respect to the column 12. The movement apparatus moves the carriage 17 in the direction of the X axis with respect to the bed 11. In the column 12, a cavity part 12c is formed so as to enable the carriage 17 to partially enter. The movement apparatus moves the main spindle head 14 in the direction of the Z axis with respect to the saddle 15. The movement apparatus rotates the table 16 around the axis line of the C axis. In addition, the movement apparatus rotates the swing support member 18 around the axis line of the A axis with respect to the carriage 17. Thus, the machine tool 1 according to the present embodiment has three linear motion axes of the X axis, the Y axis and the Z axis orthogonal to one another, and two rotation feed axes to rotate of the A axis and the C axis. The machine tool may be in other forms. For example, the machine tool may be a main spindle turning type that has the A axis and the C axis on a main spindle side. The machine tool may be a mixed type that has the C axis on a table side and the A axis on the main spindle side, or a type of which main spindle may be a horizontal type, or a type without a rotation feed axis.

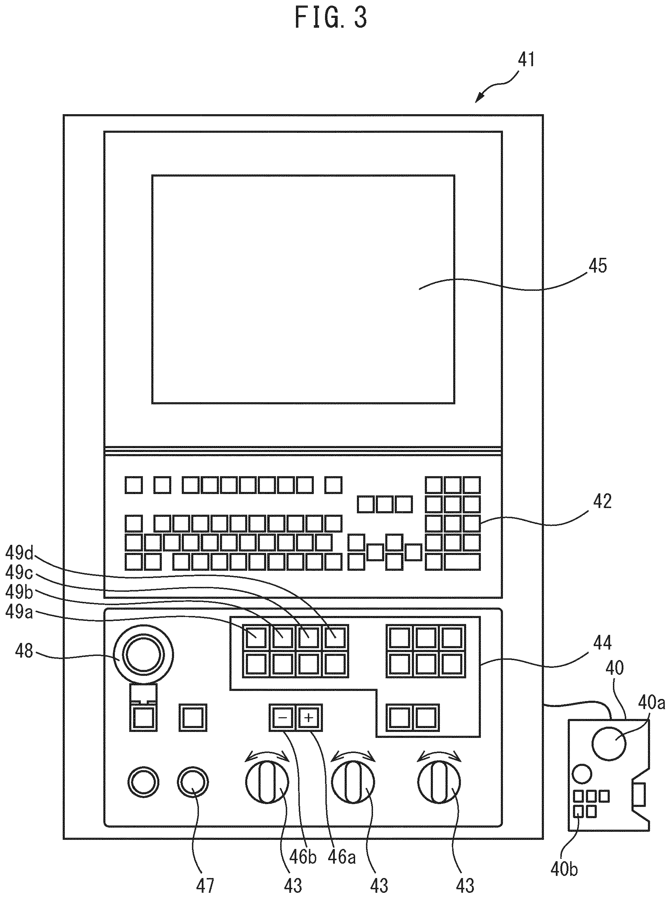

FIG. 3 shows a schematic front view of an operation panel arranged in the control apparatus of the machine tool. Referring to FIGS. 1 and 3, an operation panel 41 includes the manual input part 29 and a display part 28 of the control apparatus 70. The operation panel 41 includes a display panel 45 that serves as the display part 28. The display panel 45 according to the present embodiment is a touch panel type. The display panel 45 also functions as an operation part 30. Note that as an apparatus for designating an arbitrary position of the screen, a pointing device such as a mouse, a joystick or a touch pad may be employed in place of a display part of the touch panel type.

The operation panel 41 includes a keyboard part 42. A predetermined numeral or letter can be inputted by pressing a key switch of the keyboard part 42. The operation panel 41 includes an operation switch part 44 that performs selection of a predetermined operation. The operation panel 41 includes jog buttons 46a and 46b for manually driving the machine tool in a positive direction or a negative direction, and an override setting part 43 that performs setting of an override value. In addition, the operation panel 41 includes buttons such as an emergency stop button 48 for immediately stopping the machine tool at the time of an abnormality or the like, and an execution button 47 for starting driving of the machine tool.

A manual pulse generator 40 is connected to the operation panel 41. The manual pulse generator 40 is formed to be compact so as to be held and operated by the operator. An axis selection button 40b for selecting a feed axis used to drive and a dial 40a for adjusting a pulse generation amount are arranged in the manual pulse generator 40.

The keyboard part 42, the operation switch part 44, the override setting part 43, and various buttons arranged on the operation panel 41 function as the manual input part 29 of the operation part 30. The manual pulse generator 40 also functions as the manual input part 29 of the operation part 30.

When operating the machine tool, the operator selects an operation mode of the machine tool. Operation mode selection buttons 49a to 49d for selecting operation modes of the machine tool are arranged in the operation switch part 44. The operator sets a type of an operation as an operation mode in the machine tool. The operation mode of the machine tool can be changed by pressing the desired operation mode selection buttons 49a to 49d.

For example, when performing editing of a machining program, the machine tool is set to an edit mode by pressing the operation mode selectin button 49a. When driving the machine tool on the basis of the machining program, the machine tool is set to an execution mode by pressing the operation mode selection button 49b. When manually operating the machine tool, the machine tool is set to a manual operation mode by pressing the operation mode selectin button 49c.

The control apparatus 70 for the machine tool according to the present embodiment can display a three-dimensional image of its own machine tool on the display panel 45. In other words, a stereoscopic image can be displayed on the display panel 45. The images of the machine tool include an image of the auxiliary apparatus 33 in addition to those of the workpiece and the tool. A preparation operation for displaying the three-dimensional image on the display panel 45 will be described.

Referring to FIG. 1, model data 39 for displaying the three-dimensional image is inputted to the information control part 20. The model data 39 can be generated from a solid model. The model data 39 includes model data relating to a shape of the machine tool. The model data of the machine tool can include information on the auxiliary apparatus 33 such as a tool replacement apparatus in addition to information on a body of the machine tool 1 including the table 16 and the main spindle head 14. A manufacturer of the machine tool can input the model data of the machine tool to the information control part 20 in advance, and store the model data in a storage part 26.

The model data 39 includes model data relating to a shape of the workpiece. The model data of the workpiece includes model data of the workpiece before machining. In other words, model data of a blank is included. The model data of the workpiece includes model data of the workpiece after machining. The model data of the workpiece can be generated by, for example, a CAD apparatus or a CAM apparatus 77. The model data of the workpiece includes information on a position of arrangement on the table 16 of the machine tool 1 in addition to the information on the shape of the workpiece. When the information on the position of the workpiece on the table 16 is not included, setting is carried out so as to arrange the workpiece in the center of the table 16. In addition, the model data of the workpiece can include model data of a work mounting tool.

Further, the model data 39 includes model data relating to a shape of the tool. For the model data of the tool, model data supplied by the manufacturer of the tool can be used. The operator can input the model data of the workpiece and the model data of the tool to the information control part 20, and store the model data in the storage part 26.

In the control apparatus 70 according to the present embodiment, a part of the machine tool 1 can be designated in the image of the machine tool displayed on the display part 28 as described below. The display control part 22 detects a pressed position on the display panel 45, and specifies a part of the machine tool selected by the operator on the basis of the pressed position. For example, the table 16 can be selected by pressing an image of the table 16 of the machine tool 1 by a finger.

However, since the operator machines various workpieces, misalignment may occur between a position of the workpiece displayed on the display part 28 and an actual position of the workpiece. Thus, the position of the workpiece on the table 16 needs to be calibrated before machining of the workpiece. Calibration of the position of the workpiece on the table 16 will now be described.

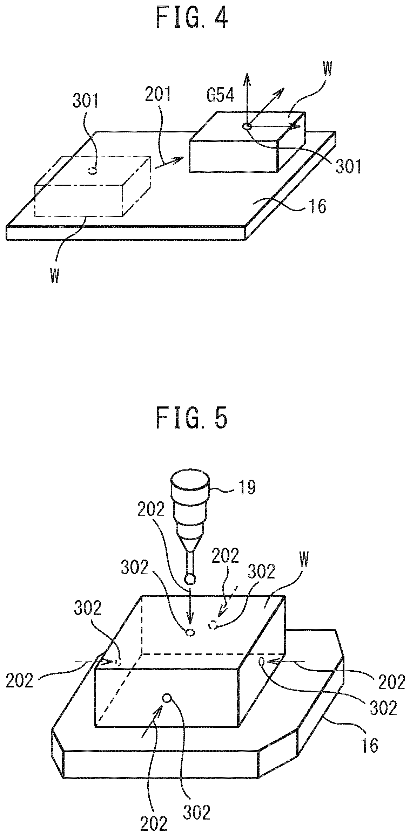

FIG. 4 shows a schematic perspective view illustrating the calibration of the position of the workpiece on the table. A position of a workpiece W before calibration is indicated by a dashed line. A position of the workpiece W after calibration is indicated by a solid line. Work coordinates G54 stored in the machine tool on the basis of the model data of the workpiece are shown. Before calibration, a reference point 301 of the workpiece W is misaligned from a position of an original point of the work coordinates G54. Thus, the calibration is performed to overlap the reference point 301 of the workpiece W with the original point of the work coordinates G54 as indicated by an arrow 201. In the present embodiment, the actual workpiece W arranged on the table 16 is moved.

FIG. 5 shows a schematic perspective view illustrating measurement for calibrating the position of the workpiece arranged on the table. A position of the reference point 301 is calculated in order to detect a position of the actual workpiece arranged on the table. A position detection apparatus 34 according to the present embodiment includes a touch probe 19. In this example, a rectangular parallelepiped workpiece W before machining is arranged on the table 16.

Referring to FIGS. 1, 4, and 5, a plurality of measurement points 302 are set roughly in the central part of each surface of the workpiece W. Then, a tip of the touch probe 19 is brought into contact with the plurality of measurement points 302 as indicated by an arrow 202. The arithmetic processing part 25 of the information control part 20 detects coordinate values at this time. In other words, the arithmetic processing part 25 detects coordinate values of the plurality of measurement points 302.

The arithmetic processing part 25 calculates a coordinate value of the reference point 301 of the workpiece W by using the coordinate values of the plurality of measurement points 302. Then, the arithmetic processing part 25 calculates an amount of misalignment between the reference point 301 and the original point of the work coordinates G54. The operator can adjust the position of the workpiece W on the table 16 as indicated by the arrow 201 on the basis of the calculated amount of the misalignment. The operator can adjust the position by using, for example, a dial gauge. Thus, the calibration for aligning the actual position of the workpiece W with the position of the model data of the workpiece can be executed.

The calibration of the position of the workpiece is not limited to this form, but the position of the workpiece on the table in the model data may be calibrated. For example, in the example illustrated in FIG. 4, the position of the original point of the work coordinates G54 may be moved on the basis of an actual measurement result of the workpiece.

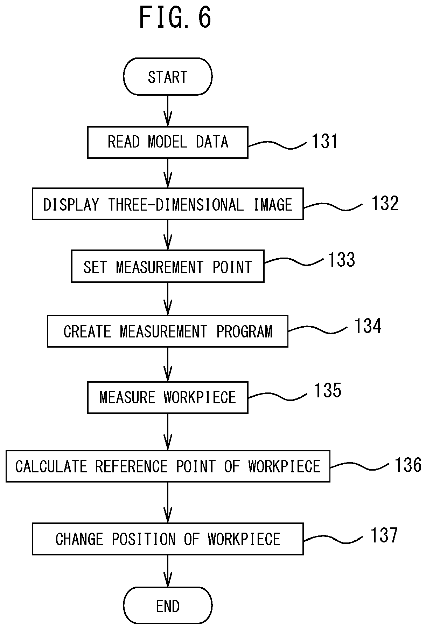

FIG. 6 shows a flowchart of performing calibration of the position of the workpiece in the present embodiment. Referring to FIGS. 1 and 6, in step 131, the arithmetic processing part 25 reads a model data 39. In this state, a position of the workpiece on the table in the model data and the actual position of the workpiece arranged on the table are in the state of misalignment with each other.

In step 132, the display control part 22 displays a three-dimensional image on the display part 28 on the basis of the model data.

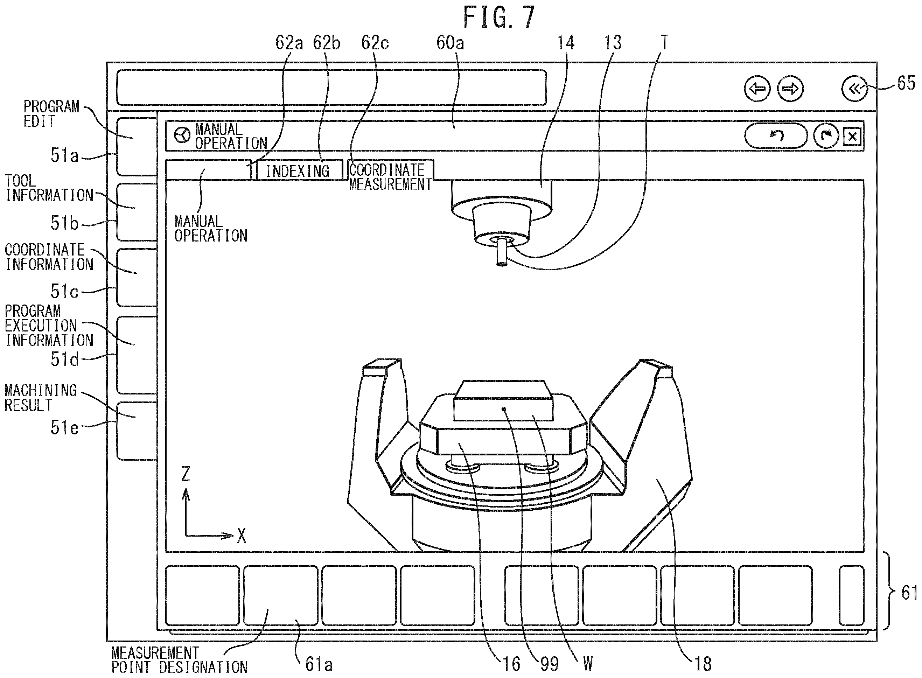

FIG. 7 shows an image displayed on the display part when the workpiece is measured. On this screen, first manual operation screen 60a as an auxiliary screen is displayed on a main screen. The manual operation screen 60a is a screen for inputting an operation of the machine tool or displaying a state of the machine tool when the machine tool is manually operated. A screen displayed by pressing selection parts 51a to 51e is a screen frequently used for actual machining, and is referred to as a main screen in the present embodiment.

A program edit screen can be displayed by pressing a selection part 51a for program edit among the selection parts 51a to 51e. The program edit screen is a screen for creating or displaying a machining program for machining the workpiece. A tool information screen for inputting, displaying or editing information on the tool can be displayed by pressing a selection part 51b for tool information. A coordinate information screen for inputting, displaying or editing coordinate information can be displayed by pressing a selection part 51c for coordinate information. A screen for showing a state of the machine tool during execution of a program is displayed by pressing a selection part 51d. A measurement result or the like of the workpiece after machining is displayed by pressing the selection part 51e.

Referring to FIG. 3, when manually driving the machine tool, the operator sets an operation mode of the machine tool to a manual operation mode by pressing an operation mode selection button 49c. Referring to FIG. 7, the operator displays a support screen by pressing a support screen button 65. Then, the manual operation screen 60a is displayed by selecting an item of a manual operation screen from the support screen.

Referring to FIG. 7, the manual operation screen 60a has selection parts 62a to 62c. A selection part 62a is selected when manually driving the workpiece, the tool or an auxiliary apparatus. A selection part 62b is selected when directing a predetermined surface to the tool. A selection part 62c is selected when measuring a coordinate value at an arbitrary point of the workpiece. In this example, the selection part 62c is selected.

On the manual operation screen 60a, a main spindle head 14, a tool T, a table 16, and a workpiece W arranged on the table 16 are displayed by a three-dimensional image. The operator can designate a measurement point 302 for performing calibration of the position of the workpiece on the table in the three-dimensional image. As described below, the display control part 22 according to the present embodiment can magnify or reduce the three-dimensional image. The display control part 22 can move the three-dimensional image in a desired direction. For example, a part to be displayed can be changed by linearly moving the image, or the direction of displaying can be changed by rotating the image.

Referring to FIGS. 1, 6, and 7, in step 133, the operator designates the measurement point 302 in the three-dimensional image. The operator presses a button 61a for designation of the measurement point that is arranged in a button area 61. Hereafter, the operator displays a mark 99 of the measurement point 302 by pressing a part of the measurement point 302 of the image by a finger. The display control part 22 detects a position of the measurement point 302. The operator designates all the measurement points 302 by changing the direction of the three-dimensional image.

In step 134, a program creation part 21 creates a measurement program. Referring to FIG. 5, the program creation part 21 creates the measurement program for moving a touch probe 19 with respect to a plurality of measurement points 302 as indicated by the arrow 202. In other words, the measurement program for moving the table 16 and the main spindle head 14 is created so that a tip of the touch probe 19 may come into contact with the measurement point 302.

Then, in step 135, measurement of the workpiece is executed. In other words, referring to FIG. 3, measurement of coordinates at the measurement point 302 is automatically started when the operator presses an execution button 47 on an operation panel 41. Referring to FIGS. 1 and 5, the information control part 20 transmits the created measurement program to the reading interpretation part 72. The main spindle head 14 moves toward the workpiece W. The touch probe 19 gradually moves from a position away from a measurement surface toward the measurement point 302. Then, the work measurement apparatus 35 detects contact of the tip of the touch probe 19 with the measurement surface of the workpiece. The arithmetic processing part 25 detects a coordinate value at the time of the contact of the tip of the touch probe 19. The coordinate value can be detected by a position detection apparatus 34. For example, a mechanical coordinate value at each of the measurement point 302 can be detected.

Referring to FIG. 6, then, in step 136, the arithmetic processing part 25 calculates an actual coordinate value at a reference point 301 of the workpiece W on the basis of coordinate values at a plurality of measurement points 302. In addition, the arithmetic processing part 25 calculates a misaligned amount between the actual position of the workpiece W and the position of the workpiece in a model data. The display control part 22 displays the actual coordinate value at the reference point 301 of the workpiece W and the misaligned amount on a display part 28.

In step 137, the actual position of the workpiece W is aligned with the position of the workpiece in the model data. In the present embodiment, the operator adjusts the actual position of the workpiece W on the table 16.

Thus, the calibration of the position of the workpiece can be performed. The three-dimensional image of the workpiece can be accurately displayed on the display part. For example, when the operator designates a specific part of the image of the workpiece, the control apparatus can correctly recognize the designated part of the actual workpiece.

Note that on a manual operation screen 60a, measurement of a size of the workpiece can be performed in addition to calibration of the position of the workpiece by the same operation as described above. For example, a size of the workpiece after machining can be measured by bringing a probe into contact with a predetermined part of the workpiece after machining in order to obtain data about machining accuracy.

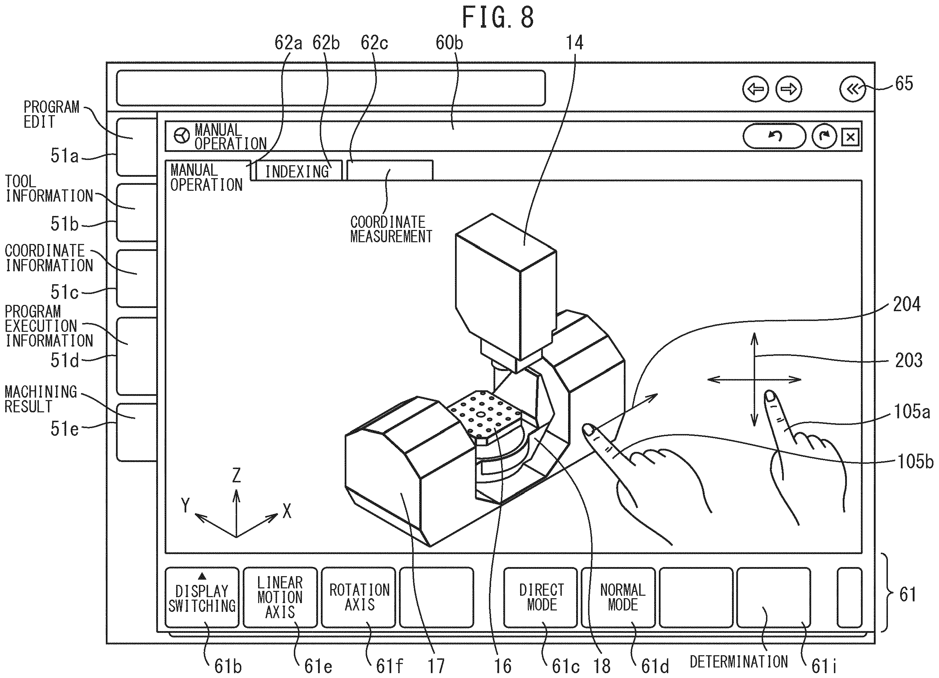

FIG. 8 shows second manual operation screen in the present embodiment. When manually driving the machine tool, the operator can display the auxiliary screen of a viewpoint switching button by pressing a button 61b for display switching. On this auxiliary screen, viewpoints of the three-dimensional image of the machine tool to be displayed can be selected. The operator selects a desired viewpoint on the auxiliary screen, and displays the image of the machine tool seen from the viewpoint on the screen. Referring to FIG. 3, by pressing a jog button 46a or a jog button 46b on the operation panel 41, the image and an actual feed axis of the machine tool can be driven in a desired direction with respect to the selected feed axis. Alternatively, in a manual pulse generator 40, a desired feed axis is selected by the axis selection button 40b. Then, the selected feed axis can be driven in a desired direction by rotating a dial 40a.

However, in such a method of manual operation, the operator may not be certain of which feed axis corresponds to a direction of operation desired by the operator. The operator may not be certain of whether a positive side or a negative side is a direction of a movement. In case of a large machine tool, the jog button needs to be pressed continuously for a long time, or the dial needs to be rotated continuously for a long time in order to move for a long distance, and thus labor is greater.

The control apparatus 70 according to the present embodiment enables the operator to manually drive the machine tool by operating the three-dimensional image displayed on the display panel 45. Operation of the machine tool corresponding to an operation of the operator with respect to the image of the machine tool is stored in the storage part 26 in advance. The control apparatus 70 obtains content of an operation of the operator with respect to the image of the machine tool, and generates an operation command for driving the machine tool corresponding to the content of the operation. The machine tool is driven on the basis of the operation command.

Referring to FIG. 8, a selection part 62a is selected on the manual operation screen 60b. When the button 61b for display switching displayed in a button area 61 is pressed, a list of parts to be displayed is displayed. Herein, the table 16 and the main spindle head 14 are displayed by selecting a part of the table and the main spindle head.

First, a method for moving or rotating the three-dimensional image will be described. By moving the image in a desired direction indicated by an arrow 203 while pressing an area in which the image of the machine tool is not displayed by a finger 105a, the image can be linearly moved within the screen or can be rotationally moved so that a back side can be displayed. For example, the image linearly moves when moved by touching the screen by two fingers, and the screen rotationally moves when moved by touching the screen by one finger.

Further, a displayed part can be magnified by pressing an area by two fingers in which the image of the machine tool is not displayed and by widening a gap between the fingers. The image can be reduced by narrowing the gap between two fingers. Magnification, a reduction, the linear movement and the rotation movement of the three-dimensional image facilitate viewing of a desired part of the machine tool or the workpiece. For example, when a recessed part is formed in the workpiece, a shape inside the recessed part can be checked.

The display control part 22 recognizes a motion of a finger after pressing the display panel 45 by the finger, and moves or magnifies the image. Thus, a desired part can be displayed from a desired angle on the display panel 45 according to the present embodiment. In addition, the desired part can be displayed with a desired magnification on the display part.

Next, a direct mode among manual operation modes for manually driving the machine tool will be described. The direct mode is an operation mode for moving the image by a finger and driving the actual machine tool as indicated by the image. In the button area 61, a button 61c for the direct mode is pressed and selected. In this example, a carriage 17 is moved to a positive side of the X axis. A button 61e for a linear motion axis is selected. The carriage 17 is pressed and selected by a finger 105b. The finger 105b is moved in a direction indicated by an arrow 204 while maintaining the carriage 17 in the pressed state.

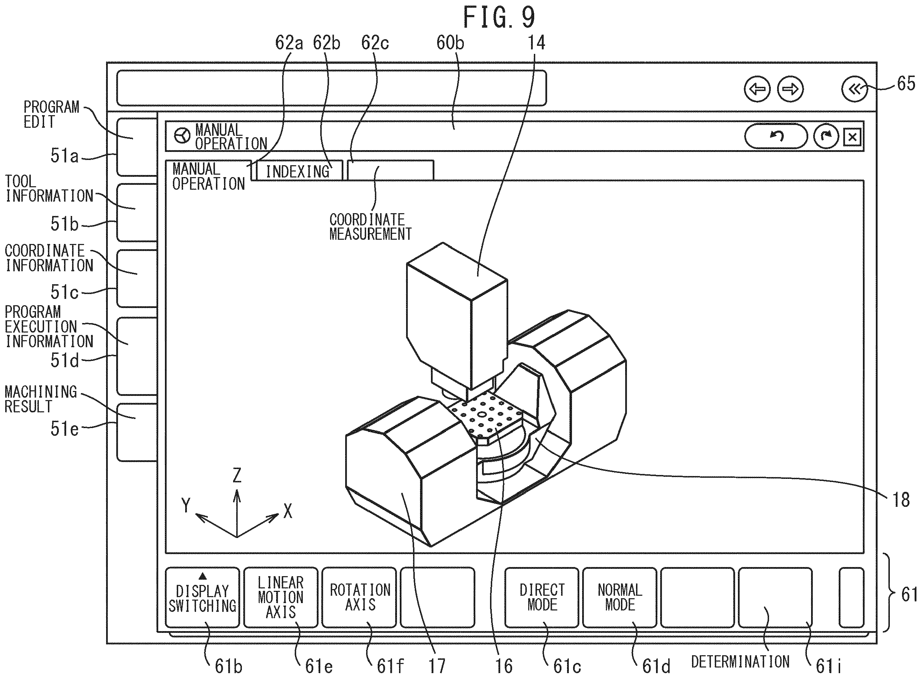

FIG. 9 shows third manual operation screen in the present embodiment. FIG. 9 illustrates the manual operation screen 60b after the carriage 17 is moved in the direction indicated by the arrow 204. The carriage 17 is moved while the main spindle head 14 is not moved. In the actual machine tool, the carriage 17 is also moved to the positive side of the X axis. An actual movement amount of the machine tool in this case corresponds to the movement amount on the screen. In other words, the more a predetermined part is moved on the screen, the more a corresponding part of the actual machine tool moves. Note that an actual movement speed may correspond to the movement speed of the finger. Such control may be executed as the faster the movement speed of the finger is, the faster the actual movement gets.

When rotationally moving a predetermined part of the machine tool along the rotation feed axis, a button 61f for a rotation axis in the button area 61 is selected. A part to be rotated is pressed by a finger, and can be rotationally moved by moving the finger in a direction to be rotated while maintaining a state of pressing by the finger. For example, by moving the finger in a desired rotation direction while pressing the swing support member 18, the swing support member 18 can be rotationally moved in the direction of the A axis in the image of the machine tool and the actual machine tool.

Thus, in the present embodiment, the part displayed on the screen can be moved in the direction of the feed axis. The actual machine tool can be manually driven by operating the three-dimensional image displayed on the display part 28. The operator can intuitively drive the machine tool while watching the three-dimensional image, and can easily drive the machine tool accordingly. In addition, an erroneous operation can be suppressed. For example, a movement of the workpiece or the tool to a side opposite the desired direction can be suppressed.

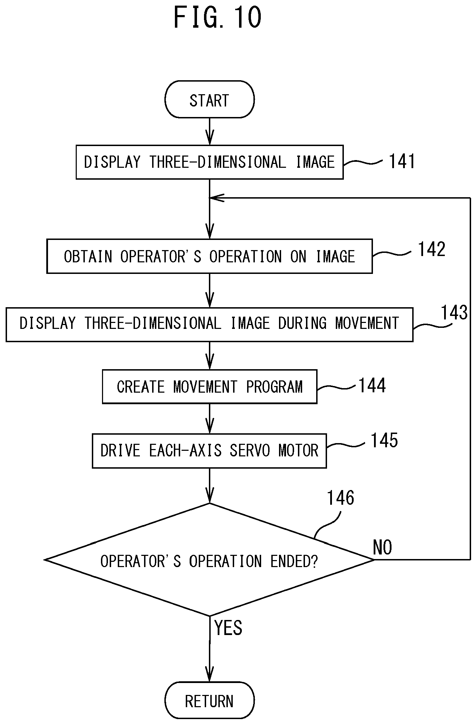

FIG. 10 shows a flowchart of control executed when the machine tool is manually driven in the direct mode. Referring to FIGS. 1 and 10, in step 141, the display control part 22 displays the three-dimensional image on the display part 28. In step 142, the display control part 22 obtains content of the operation of the operator in the three-dimensional image. For example, the display control part 22 obtains the information that a predetermined point of the three-dimensional image is pressed. The display control part 22 detects a part of the machine tool selected by the finger. The display control part 22 detects a movement of a pressed part in a predetermined direction in a predetermined time. The display control part 22 detects a movement direction and a movement distance of the pressed part. As the movement direction of the finger, the direction of a rotation movement along a predetermined rotation feed axis or the direction of a linear movement along a predetermined linear motion axis is detected.

Then, in step 143, the display control part 22 displays an image of the machine tool during movement. The display control part 22 moves the image displayed on the display part 28 in accordance with a motion of the finger. In step 144, the program creation part 21 creates a movement program for moving a part selected by the finger. The arithmetic processing part 25 calculates the movement amount in the direction of a corresponding feed axis on the basis of the movement direction and the movement amount of the finger. The movement amount is calculated so that the movement amount in the image corresponds to the actual movement amount of the machine tool. The program creation part 21 creates the movement program on the basis of the selected feed axis and the calculated movement amount. Thus, the program creation part 21 creates the movement program for instantaneously moving the selected part of the machine tool.

In step 145, an information control part 20 transmits the movement program to a reading interpretation part 72. The each-axis servo motor 75 is driven by the servo control part 74. As a result, the selected part of the machine tool 1 moves in the direction of a predetermined feed axis similarly to the motion of the image displayed on the display part 28. In place of creating the movement program according to the operation of the operator in the screen, selection of a feed axis, a feeding direction, and a feeding amount according to the operation of the operator in the screen may be converted into signals of the axis selection button 40b and a direction for rotating a dial 40a and a signal of a pulse generation amount in a manual pulse generator 40. The signals may be transmitted to the servo control part 74.

Next, in step 146, it is determined whether or not the operation of the operator with respect to the image is ended. The arithmetic processing part 25 determines whether or not the movement of the pressed part on the display part 28 is ended. In other words, it is determined whether the motion of the finger is stopped or whether the finger is moved away from the screen. When the movement of the pressed part on the display part 28 continues, the process returns to step 142 so as to continue the movement of the image and the driving of the machine tool. When the movement of the pressed part on the display part 28 is ended, the control is finished. By repeating the control within a short time, the machine tool can be continuously driven in accordance with the image. In this case, for safety, even when an instruction of a large movement by an finger of the operator is issued, a limit can be added in such a manner that the movement along the feed axis is performed only by a predetermined movement amount, for example, 50 mm, for one finger movement. The arithmetic processing part 25 determines whether or not the model data of the machine tool, the model data of the tool, and the model data of a workpiece, which mutually move, interfere with each other. When the model data interfere with each other, the motion of the image on the screen is stopped, and the movement along the feed axis of the machine tool is stopped. As such interference check is performed in this way, even when the operator carelessly operates the image, collision of the tool with the workpiece or exceeding of a stroke end in the feed axis can be prevented.

Next, a normal mode among the manual operation modes will be described. In the normal mode, a part selected in the image is moved, and a movement state including the feed axis and the movement amount are stored in the storage part 26. In this case, the machine tool is stopped. After all desired movements are ended on the screen, the stored movements are executed all at once.

Referring to FIG. 8, a case where a main spindle head 14 is moved to a positive side of a Z axis after the carriage 17 is moved to the positive side of the X axis will be exemplified. When executing the normal mode, a normal mode button 61d is selected. The carriage 17 is moved on the image by moving a finger 105b. In this case, the carriage 17 is stopped in the actual machine tool while the carriage 17 moves on the image. Then, the main spindle head 14 is pressed by the finger 105b and moved to the positive side of the Z axis. The main spindle head 14 is stopped in the actual machine tool while the main spindle head 14 moves to the positive side of the Z axis on the image. Next, by pressing a determination button 61i and pressing an execution button 47 on an operation panel 41, selected parts of the machine tool move according to an order of a movement on the image.

Referring to FIG. 1, in the normal mode, the storage part 26 stores the feed axis and the movement amount of the part to be moved. Alternatively, the storage part 26 may store an operation of the operator. When the operator presses the determination button 61i, the program creation part 21 creates a movement program corresponding to the operation of the operator. Then, when the operator presses the execution button 47, the information control part 20 transmits the movement program to the reading interpretation part 72, and the each-axis servo motor 75 is driven.

Thus, in the present embodiment, when a movement is executed while maintaining the selected state of a part of the image of the machine tool by the operator, the feed axis corresponding to the movement direction and the movement amount in the image of the machine tool are set. The operation command of the machine tool is generated on the basis of the movement amount of the feed axis. In the present embodiment, the movement program corresponding to the operation of the operator with respect to the screen is created. The machine tool can be driven in accordance with the image by driving the movement apparatus of each feed axis on the basis of the movement program.

Next, an index control for directing one surface of the workpiece in a desired direction will be described. In the manual operation, a predetermined surface of the workpiece may be directed in a desired direction. For example, the predetermined surface of the workpiece may be directed toward the tool, and a hole may be made in this surface by a drill. In such a case, the workpiece needs to be rotated in a predetermined direction so as to adjust the direction of the workpiece. In the present embodiment, the index control for adjusting the direction of the workpiece so that a predetermined surface of the workpiece is perpendicular to an axis line of the main spindle will be exemplified.

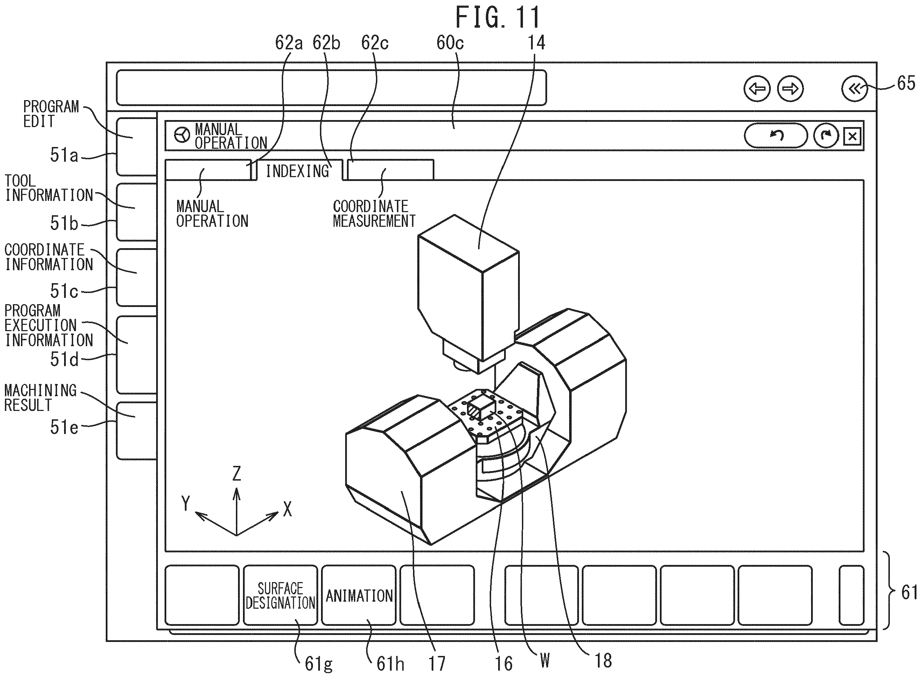

FIG. 11 shows fourth manual operation screen in the present embodiment. A selection part 62b for indexing is selected on third manual operation screen 60c. An image in which a workpiece W before machining is arranged on a table 16 is displayed on the manual operation screen 60c.

A surface for performing indexing of the workpiece W can be selected by pressing a button 61g for surface designation in a button area 61. The operator presses a desired surface by a finger by rotating or magnifying the image as needed. In the present embodiment, the selected surface is referred to as a designated surface. The designated surface, for example, is emphasized so as to be distinguished from other surfaces. In an example illustrated in FIG. 11, hatching is applied to the selected part. Indexing of the designated surface is performed by pressing the execution button 47 in the operation panel 41. The machine tool is driven together with a movement of the image displayed on the display part 28. The swing support member 18 is rotated in the direction of the A axis, and further the table 16 is rotated in the direction of the C axis.

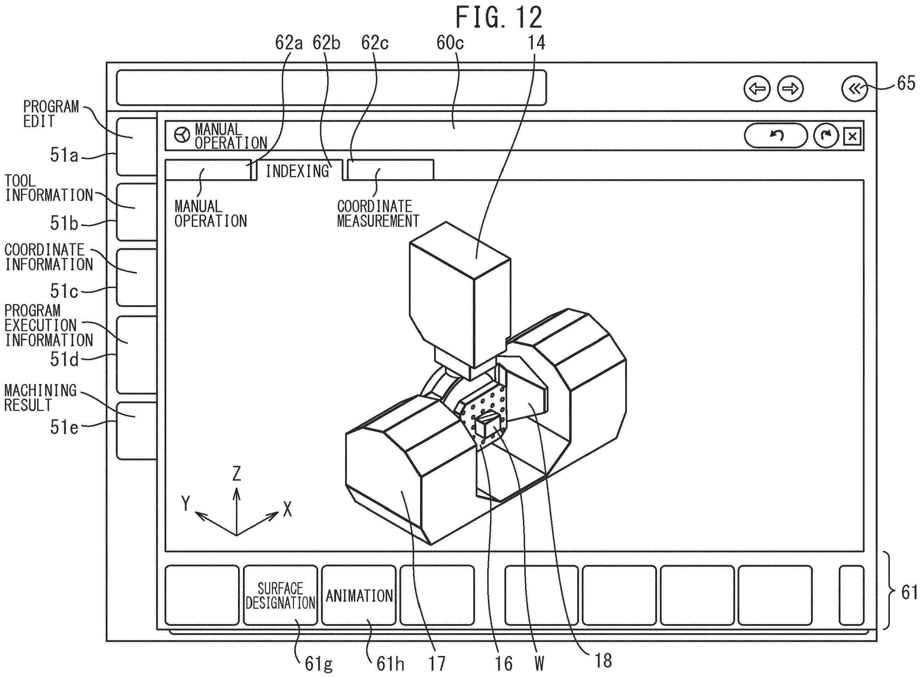

FIG. 12 shows fifth manual operation screen after indexing is performed. This manual operation screen 60c is a screen after a movement of the image displayed on the display panel 45. The table 16 rotates by 90° in the direction of the C axis, and further the swing support member 18 rotates by 90° in the direction of the A axis. The designated surface is perpendicular to the axis line of the main spindle. In the actual machine tool, an operation similar to the three-dimensional image is executed.

Referring to FIG. 1, in the index control, the display control part 22 obtains the designated surface of the workpiece selected in the image by the operator. The arithmetic processing part 25 obtains the direction and an angle of a current designated surface on the basis of the model data of the workpiece. In addition, the arithmetic processing part 25 obtains a current position of the feed axis from the position detection apparatus 34. The arithmetic processing part 25 calculates the movement amount of the feed axis for setting the designated surface to be perpendicular to the axis line of the main spindle. In this case, for the rotation feed axis, a rotation angle of the rotation feed axis is calculated.

Then, the display control part 22 displays an image in which the machine tool is driven along the selected feed axis. The program creation part 21 creates a movement program for driving the machine tool. The movement program created by the program creation part 21 is transmitted to the reading interpretation part 72. Then, the each-axis servo motor 75 is driven so as to enable to perform indexing of the designated surface.

Thus, the control apparatus 70 obtains content of the operation in which one surface of the workpiece is selected as the designated surface by the operator, calculates the rotation angle in the rotation feed axis for directing the designated surface in the predetermined direction, and generates the operation command for rotating the table on the basis of the rotation angle. The designated surface for performing indexing can be designated easily, since the control apparatus 70 can designate the designated surface in the three-dimensional image. In addition, the complex calculation of the rotation angle or the like is not necessary, and a desired surface can be easily indexed.

Referring to FIG. 11, on the manual operation screen 60c according to the present embodiment, a button 61h for animation is arranged in the button area 61. By pressing the button 61h for animation after performing selection of the designated surface, the image moves and an operation of the machine tool can be checked. A status of a movement can be checked by the three-dimensional image, while a stopped state of the machine tool is maintained. Thus, it can be checked whether or not there is an abnormality in the three-dimensional image. For example, noninterference of a tool T with respect to a workpiece W can be checked in advance. Hereafter, index of the designated surface can be performed by pressing the execution button 47 in the operation panel 41.

In the present embodiment, a surface perpendicular to a work mounting surface of the table 16 is set as the designated surface of the workpiece. However, an inclined surface neither parallel nor perpendicular to the work mounting surface can be set as the designated surface. The machine tool 1 according to the present embodiment is a table turning type having the A axis and the C axis on the side of the table 16. In case of the machine tool of a main spindle turning type having the A axis and the C axis on a main spindle side, the main spindle side rotates along the A axis or the C axis, and the axis line of the main spindle can be perpendicular to the designated surface. In case of a machine tool of a mixed type having the A axis on the main spindle side and the C axis on a table side, the main spindle side and the table side rotate and the axis line of the main spindle can be perpendicular to the designated surface. Further, in the present embodiment, the control for directing the designated surface selected by the operator toward the main spindle is described. The embodiment is not limited to this, and can be applied to control for directing the designated surface in a predetermined direction. For example, the control apparatus can be formed so as to be able to set a direction in which the designated surface is directed.

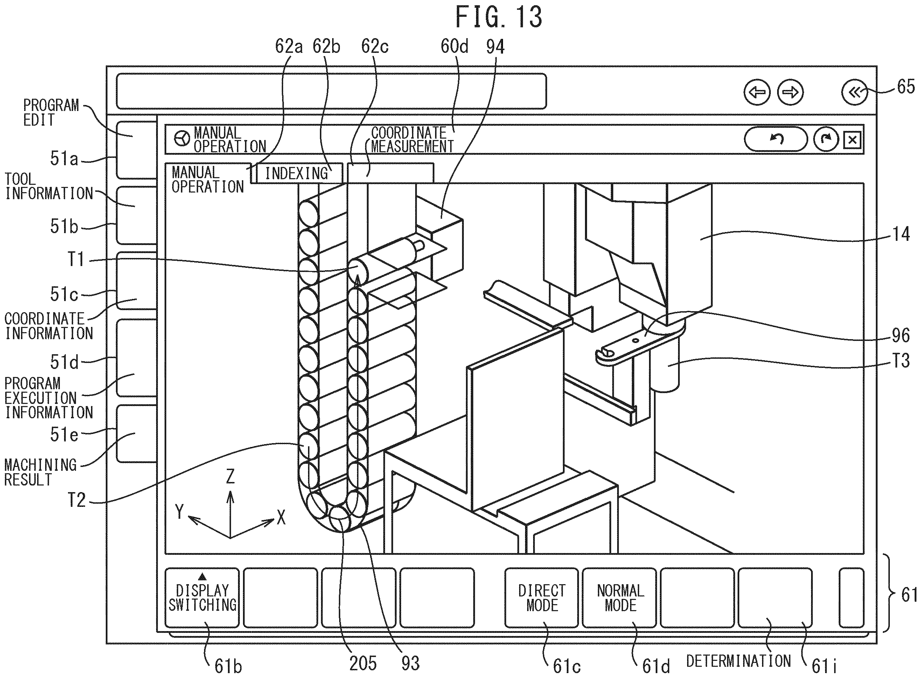

FIG. 13 shows sixth manual operation screen in the present embodiment. In the abovementioned control, the tool or the workpiece is moved by the operation on the manual operation screen. In the present embodiment, an auxiliary apparatus 33 provided in the machine tool in addition to the tool and the workpiece can be moved by the operation on a manual operation screen 60d. A tool replacement apparatus among the auxiliary apparatus 33 will be exemplified.

On the manual operation screen 60d, the tool replacement apparatus is selected from a menu displayed by pressing a button 61b for display switching. The tool replacement apparatus according to the present embodiment includes a tool magazine 93 for storing a plurality of tools T, a replacement arm 96 for fitting or removing the tool to or from the main spindle, and a conveyance apparatus 94 for conveying the tool between the tool magazine 93 and the replacement arm 96. A plurality of tools are arranged in the tool magazine 93. Positions of the tools T are replacement positions for taking out the tools from the tool magazine 93, or storing the tools in the tool magazine 93.

The operator moves, for example, a tool T2 to a replacement position along an extension direction of the tool magazine 93 as indicated by an arrow 205 while a state of the tool T2 being pressed by a finger is maintained. By this operation, in the image of the machine tool and the actual machined tool, the tool magazine 93 rotates and the tool T2 can be arranged at the replacement position. Thus, a movement amount of the tool magazine 93 is determined according to the movement amount of the finger. By manually moving the tool magazine 93, types of the tools arranged in the tool magazine 93 can be checked. In addition, for example, by operating an image of the conveyance apparatus 94, the tool arranged at the replacement position can be manually moved to the replacement arm 96. Note that when driving the auxiliary apparatus 33, a direct mode or a normal mode can be selected by the button 61c or 61d.

Referring to FIG. 1, when manually operating the auxiliary apparatus 33, the display control part 22 obtains content of an operation of the operator with respect to the image. An arithmetic processing part 25 calculates the movement amount. The operation command generation part 27 of the auxiliary apparatus transmits the operation command corresponding to the operation of the operator to the auxiliary apparatus control part 32. The auxiliary apparatus control part 32 operates the auxiliary apparatus 33 on the basis of the operation command. Thus, the control apparatus 70 according to the present embodiment is formed to operate the auxiliary apparatus without using a program.

As a manual operation of the auxiliary apparatus 33, in addition to the movement of the part designated by the operator, a designated part of the auxiliary apparatus 33 can be activated or stopped. Next, a cooling liquid supply apparatus will be described as an example of the auxiliary apparatus 33.

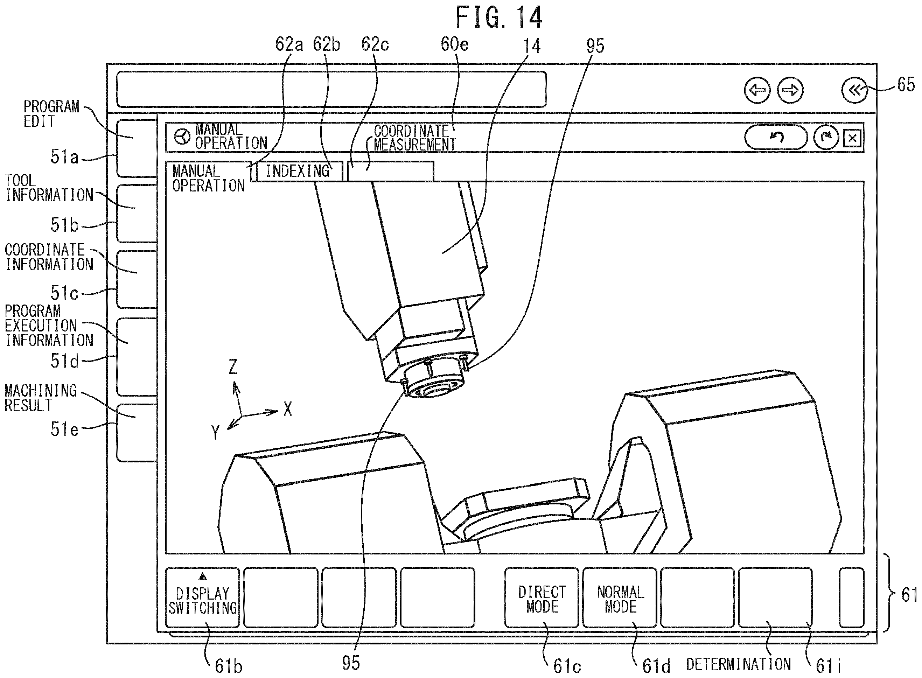

FIG. 14 shows seventh manual operation screen in the present embodiment. In the seventh manual operation screen 60e, the cooling liquid supply apparatus is selected from the list of menus displayed by pressing the button 61b for display switching. The cooling liquid supply apparatus according to the present embodiment includes a tank for storing a cooling liquid, a pump, and a cooling liquid spray nozzle 95. In the image illustrated in FIG. 14, a tip part of the main spindle head 14 is displayed in a magnified manner. The cooling liquid spray nozzle 95 is arranged at a tip of the main spindle head 14.

The operator presses the cooling liquid spray nozzle 95 on the manual operation screen 60e. By pressing the cooling liquid spray nozzle 95, the cooling liquid supply apparatus is started and the cooling liquid can be sprayed from the cooling liquid spray nozzle 95. Alternatively, by pressing the cooling liquid spray nozzle 95 when spraying the cooling liquid, the spraying of the cooling liquid can be stopped. In the present embodiment, when the auxiliary apparatus is operated, the auxiliary apparatus is highlighted so that the operated state of the auxiliary apparatus may be clear. In this example, the color of the cooling liquid spray nozzle 95 changes. Alternatively, an image that displays driving or a stop of the auxiliary apparatus may be displayed so that the driven state or the stopped state of the auxiliary apparatus may be clear.

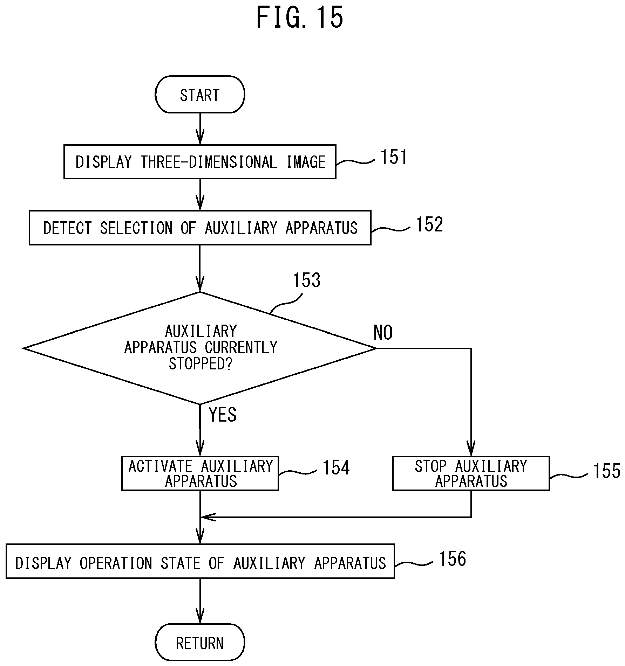

FIG. 15 shows a flowchart of control for activating or stopping the auxiliary apparatus. Referring to FIGS. 1 and 15, in step 151, the display control part 22 displays the three-dimensional image of a part selected by the operator on a display part 28. In step 152, the display control part 22 detects pressing of a predetermined auxiliary apparatus 33 in the image. In other words, the display control part 22 detects selection of the predetermined auxiliary apparatus by the operator.

Next, in step 153, the arithmetic processing part 25 determines whether or not the selected auxiliary apparatus is in a stopped state. When the auxiliary apparatus 33 is in a stopped state in step 153, the process proceeds to step 154. In step 154, the auxiliary apparatus 33 is activated. When the auxiliary apparatus 33 is in an activated state in step 153, the process proceeds to step 155. In step 155, the auxiliary apparatus 33 is stopped. Next, in step 156, an operation state of the auxiliary apparatus is displayed. In the present embodiment, the display control part 22 changes a color of the auxiliary apparatus 33 according to the operation state or the stopped state.

In the manual operation of the auxiliary apparatus 33 according to the present embodiment, the operation command generation part 27 of an information control part 20 transmits the operation command to the auxiliary apparatus control part 32. The embodiment is not limited to this, and a program creation part 21 may create a program for moving the auxiliary apparatus 33. For example, the program creation part 21 can create a program including an M code for spraying the cooling liquid from the cooling liquid spray nozzle 95. In this case, the program creation part 21 creates a program on the basis of an operation of the image by the operator, and transmits the program to the reading interpretation part 72. The reading interpretation part 72 transmits the operation command of the auxiliary apparatus 33 to the auxiliary apparatus control part 32. The auxiliary apparatus control part 32 drives the auxiliary apparatus 33 on the basis of the operation command.

Next, a support function for facilitating creation of a program such as a machining program for driving the machine tool will be described. In the creation of the machining program, a command code such as a G code or an M code is frequently used. The tool is moved relative to the workpiece, or the auxiliary apparatus is controlled on the basis of the command code.

After machining the workpiece, the machining program may be corrected by checking a machining result. Alternatively, the machined part of the workpiece in relation to the command code may be checked. However, there are so many command codes that it is difficult for the operator to remember numbers of all the command codes. Thus, in the conventional technique, a search for a relevant part relies on the memory of the operator. Alternatively, a search for a relevant part by the operator relies on referring to reference literature. Thus, the operator needs to have a high level of knowledge or a judgment. In addition, there may be a case of taking a long time or an occurrence of errors.

In the control apparatus according to the present embodiment, the position of the machining program can be specified while watching the three-dimensional image, or the part of the workpiece to be machined can be specified on the basis of the command code of the machining program.

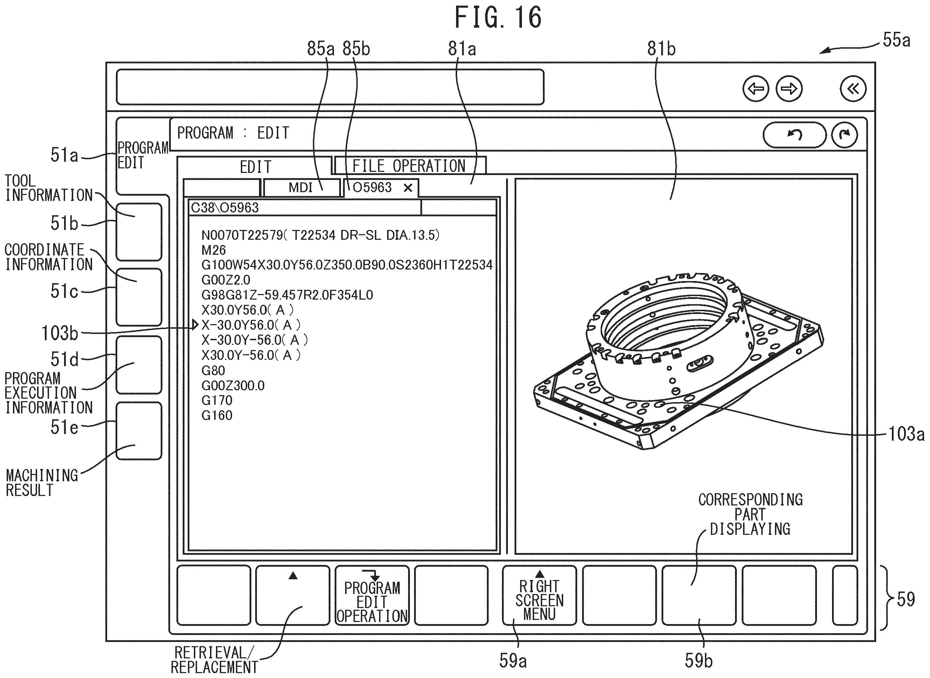

FIG. 16 shows first program edit screen displayed on a display panel of an operation panel. Creation of a program according to the present embodiment includes a case where a program is newly created and a case where a previously created program is edited in order to create a current program. When creating a machining program, referring to FIG. 3, the operation mode selection button 49a for setting to an edit mode is pressed. Referring to FIG. 16, a program edit screen 55a is displayed by pressing a selection part 51a.

The program edit screen 55a according to the present embodiment includes a display area 81a and a display area 81b. The machining program is displayed in the display area 81a. The machining program can be created in the display area 81a. A plurality of selection parts 85a and 85b are arranged in the display area 81a. A user can select a machining program to be created by pressing either one of the selection part 85a or the selection part 85b. Here, the selection part 85b is selected.

In addition, information displayed in the right display area 81b can be selected by pressing a button 59a arranged in a button area 59. In this example, the three-dimensional image of the workpiece after machining is displayed in the display area 81b.

In the program edit screen 55a, a desired part of the image displayed in the display area 81b can be selected by pressing the image by a finger. A relevant place of the machining program for machining the selected part of the image can be displayed in the display area 81a. For example, one hole 103a is selected in the image of the workpiece of the display area 81b. The relevant part of the machining program is displayed in the display area 81a by pressing a button 59b for a display of the corresponding part in the button area 59. Further, a mark 103b is displayed in the relevant part. The mark 103b indicates the command code for machining the hole 103a of the workpiece.

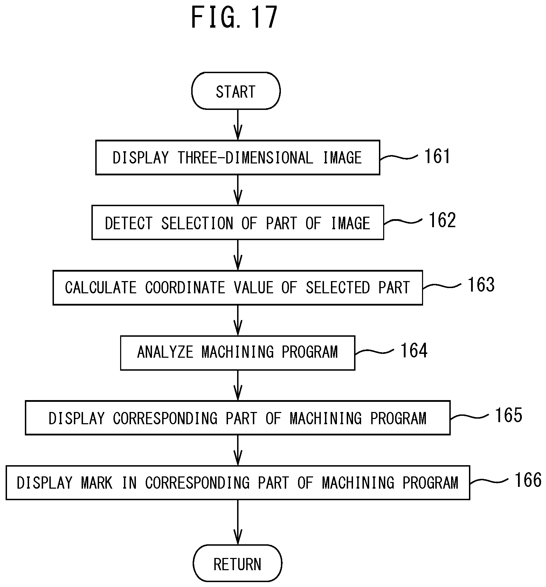

FIG. 17 shows a flowchart of control for selecting the desired part of the three-dimensional image so as to display the relevant part of the machining program. Referring to FIGS. 1 and 17, in step 161, the display control part 22 displays the machining program and the three-dimensional image of the workpiece on a display part 28. The operator selects the desired part of the image by pressing the part. In step 162, the display control part 22 detects selection of a part of the image of the workpiece. In other words, the display control part 22 detects the part of the workpiece selected by the operator.

Next, in step 163, the arithmetic processing part 25 calculates a coordinate value of the selected part of the workpiece. For example, the coordinate value of work coordinates is calculated. In step 164, the arithmetic processing part 25 performs analysis of the machining program. The arithmetic processing part 25 extracts the command code for machining a part of the calculated coordinate value from the machining program. When there is a plurality of corresponding parts in the machining program, the last command code is selected. Alternatively, when there is a plurality of corresponding parts in the machining program, all may be extracted.

Next, in step 165, the display control part 22 displays the corresponding part of the machining program. For example, when the machining program is very long, a range of displaying the machining program is selected so as to display the corresponding part. Then, in step 166, the display control part 22 displays the mark 103b for the corresponding command code of the machining program.

Thus, a control apparatus 70 can extract the relevant part of the machining program on the basis of the operation of the image of the machine tool. The operator can omit time and labor for searching for the relevant part of the machining program, and can easily check and correct the relevant part of the machining program.

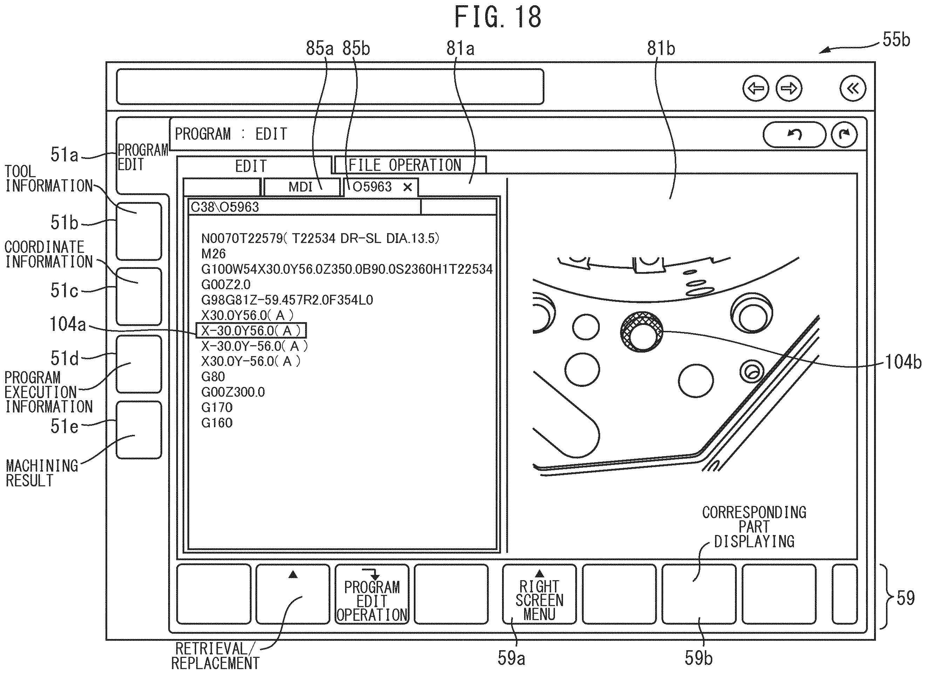

FIG. 18 shows second program edit screen displayed on the display panel of the operation panel. In the second program edit screen 55b, when a desired command code of the machining program is selected in the display area 81a, an image of a part to be machined is displayed by the selected command code in the display area 81b. For example, in the display area 81a, when the operator presses a desired part of the machining program, the selected part is surrounded with a frame 104a. By pressing the button 59b for displaying the corresponding part in the button area 59, the three-dimensional image of the workpiece corresponding to the selected part of the machining program is displayed in the display area 81b.

Further, a mark 104b is displayed in a part corresponding to the image of the machine tool. In this case, the three-dimensional image is displayed in a magnified or moved state so as to be easily seen by the operator. Thus, an image of a machining part of the workpiece can be displayed by selecting an arbitrary part of the machining program.

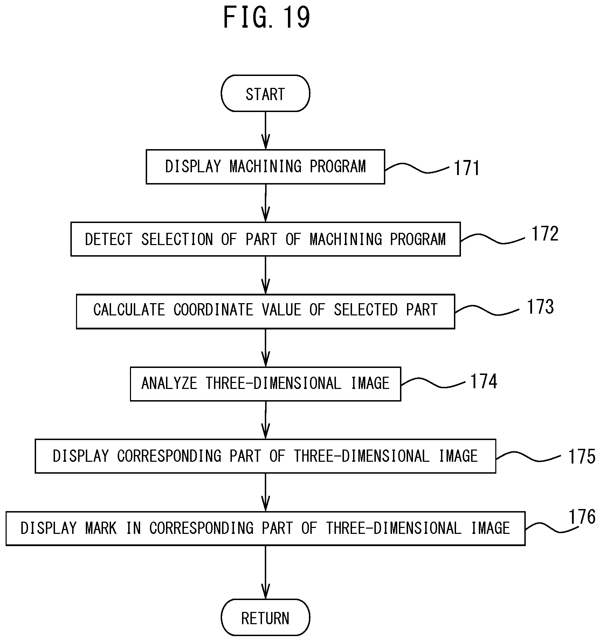

FIG. 19 shows a flowchart of control for displaying a part of the workpiece to be machined based on the selected part of the machining program. Referring to FIGS. 1 and 19, in step 171, the display control part 22 displays the machining program and the three-dimensional image of the workpiece. The operator selects a desired part of the machining program. In step 172, the arithmetic processing part 25 detects a selected part of the machining program. In step 173, the arithmetic processing part 25 calculates a coordinate value of the selected part of the machining program. For example, the arithmetic processing part 25 calculates a work coordinate value. In step 174, the arithmetic processing part 25 executes analysis of the three-dimensional image. The arithmetic processing part 25 specifies a relevant part of the three-dimensional image on the basis of the calculated coordinate value.

In step 175, the display control part 22 displays the corresponding part of the three-dimensional image. The display control part 22 displays the image of the workpiece in a magnified or moved state so as to make the corresponding part easier to be seen. Next, in step 176, the display control part 22 displays the mark 104b for the corresponding part of the image.

Thus, the control apparatus 70 can easily specify the part of the workpiece to be machined at one part of the machining program. Thus, the machining program can be easily confirmed, and errors can be easily corrected.

Note that in the program edit screen, control for automatically inserting the command code for activating or stopping the auxiliary apparatus into the machining program can be executed by displaying the image of the auxiliary apparatus and pressing the image of the auxiliary apparatus. Executing this control enables the operator to easily create a machining program without memorizing a command code or an argument relating to the auxiliary apparatus. In addition, an erroneous operation such as input error of the command code can be reduced.

Next, a control for detecting a state of the machine tool and notifying the state of the machine tool or a warning to the operator will be described.

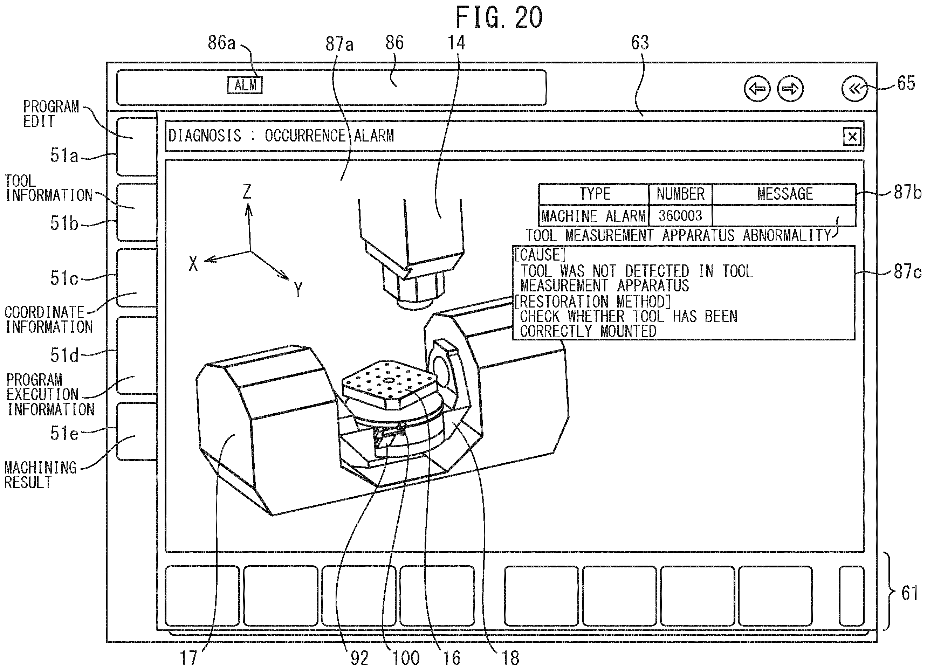

FIG. 20 shows a diagnosis screen for displaying the state of the machine tool. A diagnosis screen 63 is an auxiliary screen displayed by being superimposed on a main screen. An information display area 86 is set in an upper part of the respective main screen. Referring to FIG. 1, the operation state detection apparatus 36 detects the operation state of the machine tool in each operation mode. The arithmetic processing part 25 determines whether or not the operation state of the machine tool 1 corresponds to a predetermined condition. When the operation state of the machine tool 1 corresponds to the predetermined condition, the display control part 22 obtains a determination result, and displays an icon corresponding to the state of the machine tool 1 in the information display area 86. Images of icons are stored in the storage part 26 in advance.

In an example illustrated in FIG. 20, an abnormality occurs in a tool measurement apparatus during measurement of the tool and the measurement of the tool is interrupted. The arithmetic processing part 25 determines that the abnormality has occurred in the tool measurement apparatus 92 on the basis of a signal from the operation state detection apparatus 36. The display control part 22 displays an icon 86a for a warning in the information display area 86.

When the operator presses the icon 86a, the display control part 22 displays the diagnosis screen 63 including information on a warning or a notification of the machine tool 1. The display control part 22 first displays the three-dimensional image in a display area 87a. In this case, an image including a part in which the abnormality has occurred is displayed. The display control part 22 displays the machine tool from a direction for displaying the part in which the abnormality has occurred. In the example illustrated in FIG. 20, an image in which a table 16 and a main spindle head 14 are seen from a back side is displayed. The display control part 22 displays a mark 100 superimposed on the tool measurement apparatus 92 that is a cause of the warning. Further, the display control part 22 flashes the mark 100 so as to make the abnormality place to be easily noticed by the operator.

Next, when the operator presses the mark 100 by a finger, the display control part 22 displays a display area 87b and 87c superimposed on the image of the machine tool. The type of a warning is displayed in the display area 87b. A content of a detail relating to a cause of the warning, a restoration method or the like is displayed in the display area 87c.

Thus, since the control apparatus according to the present embodiment displays the place in which the warning has occurred in the three-dimensional image, the operator can intuitively recognize the place of the abnormality. In addition, the operator can easily check detailed information on the warning by pressing the mark 100 displayed in the place of the abnormality.

In the present embodiment, the example of the warning when the abnormality occurs in the machine tool has been described. The embodiment is not limited to this, and a notification of the state of the machine tool may be employed. For example, a notification of arrival of repair timing of the machine tool or the like may be employed.

The mark that displays a part relating to a warning or a notification such as an abnormal part can be displayed by changing a display form according to a degree of importance. For example, when the operation is not possible to be continued due to damage or the like of the machine tool, the mark can be changed red to be flashed. In case of a minor warning which allows the operation to be continued, the mark can be changed yellow to be lit. In case of the notification of the repair timing of the machine tool, the mark can be changed blue to be lit.

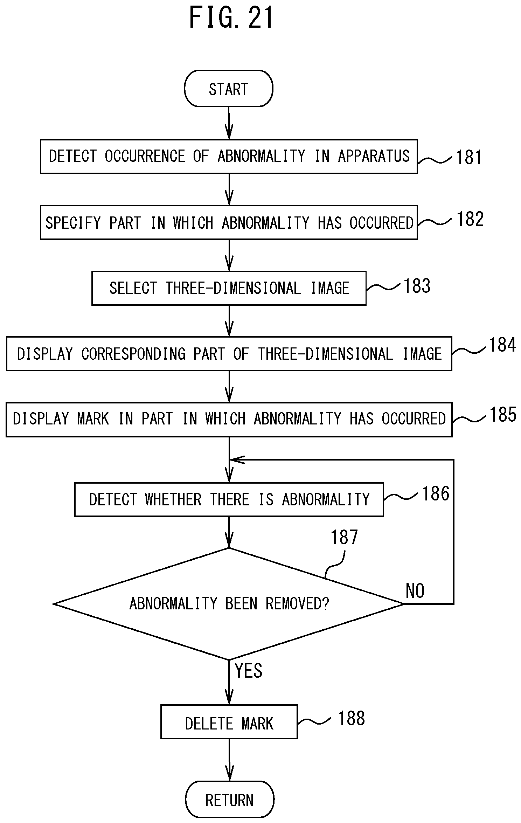

FIG. 21 shows a flowchart of control for displaying a warning or a notification. Referring to FIGS. 1 and 21, in step 181, the operation state detection apparatus 36 detects an operation state of a predetermined part of the machine tool. The arithmetic processing part 25 detects an occurrence of an abnormality in the operation state. In step 182, the arithmetic processing part 25 specifies a part in which the abnormality has occurred.

Then, in step 183, the display control part 22 selects the three-dimensional image. Types of images displayed when abnormalities occur have been stored in the storage part 26. For example, when an abnormality occurs in the tool measurement apparatus 92, an image including the parts of the carriage 17 and the main spindle head 14 in which an image of the tool measurement apparatus 92 is included is selected.

Next, in step 184, the display control part 22 displays the three-dimensional image. In this case, the display control part 22 displays the image by selecting a direction for displaying the part in which the abnormality has occurred to be easily noticed by the operator. In step 185, the display control part 22 specifies a position of the part in which the abnormality has occurred in the image. The display control part 22 displays a mark in the part in which the abnormality has occurred in the image of the machine tool.

Then, the control apparatus 70 according to the present embodiment continuously checks whether or not the generated abnormality has been removed. The operator can remove a cause of the abnormality while watching the diagnosis screen 63. In step 186, the arithmetic processing part 25 receives a signal in respect of the operation state of the machine tool from the operation state detection apparatus 36. The arithmetic processing part 25 determines whether or not there is an abnormality.

In step 187, the arithmetic processing part 25 determines whether or not the abnormality of the apparatus has been removed. When the abnormality of the apparatus is not yet to be removed, the process returns to step 186. In other words, the determination as to presence of abnormalities is continued. When it is determined in step 187 that the abnormality of the apparatus has been removed, the process proceeds to step 188. In step 188, the mark 100 displayed on the diagnosis screen 63 is deleted. The icon 86a displayed in the information display area 86 on the main screen is deleted.

Thus, in the control apparatus according to the present embodiment, it is automatically monitored whether or not the abnormality has been removed. The control executed when the abnormality has been removed is not limited to this form, but an arbitrary control can be employed. For example, a reset button is provided in the button area on the diagnosis screen. When the abnormality has been removed, the warning or the notification can be released by pressing the reset button.

The machine tool according to the present embodiment is the machine tool of 5-axis control. The embodiment is not limited to this, and the present invention can be applied to a machine tool having an arbitrary feed axis. The image of the machine tool displayed on the display part according to the present embodiment is a stereoscopic image based on a three-dimensional solid model. However, the image may be based on a surface model or a wire frame model. Alternatively, the embodiment is not limited to this, and the image may be a two-dimensional planar image.

The abovementioned embodiments can be appropriately combined. In the abovementioned control, the order of steps can be appropriately changed within a range in which the functions and the operations are not changed. Throughout the drawings, similar and equivalent portions are assigned similar reference signs. The abovementioned embodiments are exemplary, and thus in no way limitative of the present invention. In the embodiments, changes of the embodiments described within the appended claims are included.

### Reference Signs List

- 1: machine tool
- 14: main spindle head
- 16: table
- 20: information control part
- 21: program creation part
- 22: display control part
- 25: arithmetic processing part
- 26: storage part
- 27: operation command generation part
- 28: display part
- 33: auxiliary apparatus
- 34: position detection apparatus
- 36: operation state detection apparatus
- 41: operation panel
- 45: display panel
- 55a, 55b: program edit screen
- 60a - 60e: manual operation screen
- 70: control apparatus
- 75: each-axis servo motor
- 76: machining program
- 92: tool measurement apparatus
- 93: tool magazine
- 95: cooling liquid spray nozzle
- W: workpiece
- T, T1, T2: tool

## Claims

1. A control method for a machine tool (1) that machines a workpiece (W) by moving a tool relative to the workpiece (W), comprising:
displaying an image of the workpiece (W) arranged on a table (16) of the machine tool (1) on a display part (28);
storing an operation of the machine tool (1) corresponding to an operation of an operator with respect to the image of the machine tool (1) in advance;
obtaining content of the operation of the operator with respect to the image of the machine tool (1), wherein the content of the operation includes an operation in which one surface of the workpiece (W) is selected as a designated surface by an operator;
calculating a rotation angle of a rotation feed axis (A, C) for directing the designated surface in a predetermined direction;
generating an operation command for operating the machine tool (1) corresponding to the content of the operation, wherein the operation command includes a command for rotation along the rotation feed axis (A, C) on the basis of the calculated rotation angle; and
operating the machine tool (1) on the basis of the operation command, after checking interference of a tool with respect to the workpiece (W) without driving the machine tool (1) on the basis of the operation command.

2. The control method for the machine tool (1) according to claim 1, wherein the image of the machine tool (1) displayed on the display part (28) is a three-dimensional image.

3. The control method for the machine tool according to claim 1, wherein
when a part of the image of the machine tool (1) is moved by maintaining a selected state thereof by the operator, a feed axis (X, Y, Z) and a movement amount corresponding to a movement direction in the image of the machine tool (1) are set, and
the operation command is generated on the basis of the movement amount in the feed axis (X, Y, Z).

4. The control method for the machine tool (1) according to claim 1, wherein
an image of an auxiliary apparatus (33) of the machine tool (1) is displayed on the display part (28);
the content of the operation is an operation with respect to the image of the auxiliary apparatus (33) ;
the operation command is a command for operating the auxiliary apparatus (33); and
the auxiliary apparatus (33) is operated on the basis of the operation command.

5. A control apparatus for a machine tool (1) that machines a workpiece (W) by moving a tool relative to the workpiece (W), comprising:
a display part (28) that displays an image of the machine tool (1);
a storage part (26) that stores information on the machining of the machine tool (1); and
an information control part (20) that controls the image of the machine tool (1) displayed on the display part (28), and obtains content of an operation of an operator with respect to the image of the machine tool (1), wherein
the storage part (26) stores an operation of the machine tool (1) corresponding to the operation of the operator with respect to the image of the machine tool (1); wherein
the display part (28) is configured to display an image of the workpiece (W) arranged on a table (16) of the machine tool (1); wherein
the content of the operation includes an operation in which one surface of the workpiece (W) is selected as a designated surface by an operator; wherein
the information control part (20) calculates a rotation angle of a rotation feed axis (A, C) for directing the designated surface in a predetermined direction, and generates an operation command for operating the machine tool (1) corresponding to the content of the operation; wherein
the operation command includes a command for rotation along the rotation feed axis (A, C) on the basis of the calculated rotation angle, and wherein
the machine tool (1) is configured to operate on the basis of the operation command after checking interference of a tool with respect to the workpiece (W) without driving the machine tool (1) on the basis of the operation command.

## Patentansprüche

1. Steuerungsverfahren für eine Werkzeugmaschine (1), die ein Werkstück (W) durch Bewegen eines Werkzeugs relativ zu dem Werkstück (W) bearbeitet, umfassend:
Anzeigen eines Bildes des Werkstücks (W), das auf einem Tisch (16) der Werkzeugmaschine (1) angeordnet ist, auf einem Anzeigeteil (28);
Speichern eines Arbeitsvorgangs der Werkzeugmaschine (1) im Voraus entsprechend einer Bedienung eines Bedieners in Bezug auf das Bild der Werkzeugmaschine (1);
Erhalten eines Inhalts einer Bedienung des Bedieners in Bezug auf das Bild der Werkzeugmaschine (1), wobei der Inhalt der Bedienung einen Arbeitsvorgang umfasst, bei dem eine Oberfläche des Werkstücks (W) von einem Bediener als eine markierte Oberfläche ausgewählt wird;
Berechnen eines Drehwinkels einer Drehvorschubachse (A, C) zum Lenken der markierten Oberfläche in eine vorbestimmte Richtung;
Erzeugen eines Bedienungsbefehls zum Bedienen der Werkzeugmaschine (1) entsprechend dem Inhalt der Bedienung, wobei der Bedienungsbefehl einen Befehl zur Drehung entlang der Drehvorschubachse (A, C) auf der Grundlage des berechneten Drehwinkels enthält; und
Betreiben der Werkzeugmaschine (1) auf der Grundlage des Bedienungsbefehls, nachdem eine Beeinträchtigung eines Werkzeugs in Bezug auf das Werkstück (W), ohne die Werkzeugmaschine (1) auf der Grundlage des Bedienungsbefehls anzutreiben, geprüft wurde.

2. Steuerungsverfahren für eine Werkzeugmaschine (1) nach Anspruch 1, wobei das auf dem Anzeigeteil (28) angezeigte Bild der Werkzeugmaschine (1) ein dreidimensionales Bild ist.

3. Steuerungsverfahren für eine Werkzeugmaschine nach Anspruch 1, wobei dann, wenn ein Teil des Bildes der Werkzeugmaschine (1) durch Beibehalten eines ausgewählten Zustands dessen durch den Bediener bewegt wird, eine Vorschubachse (X, Y, Z) und ein Bewegungsbetrag entsprechend einer Bewegungsrichtung in dem Bild der Werkzeugmaschine (1) gesetzt werden, und
der Bedienungsbefehl auf Grundlage des Bewegungsbetrags in der Vorschubachse (X, Y, Z) erzeugt wird.

4. Steuerungsverfahren für eine Werkzeugmaschine (1) nach Anspruch 1, wobei
ein Bild einer Hilfsvorrichtung (33) der Werkzeugmaschine (1) auf dem Anzeigeteil (28) angezeigt wird;
der Inhalt der Bedienung ein Arbeitsvorgang in Bezug auf das Bild der Hilfsvorrichtung (33) ist;
der Bedienungsbefehl ein Befehl zum Betreiben der Hilfsvorrichtung (33) ist; und
die Hilfsvorrichtung (33) auf Grundlage des Bedienungsbefehls betrieben wird.

5. Steuerungsvorrichtung für eine Werkzeugmaschine (1), die ein Werkstück (W) durch Bewegen eines Werkzeugs relativ zu dem Werkstück (W) bearbeitet, umfassend:
einen Anzeigeteil (28), das ein Bild der Werkzeugmaschine (1) anzeigt;
einen Speicherteil (26), der Informationen über die Bearbeitung der Werkzeugmaschine (1) speichert; und
einen Informationssteuerungsteil (20), der das auf dem Anzeigeteil (28) angezeigte Bild der Werkzeugmaschine (1) steuert und einen Inhalt einer Bedienung eines Bedieners in Bezug auf das Bild der Werkzeugmaschine (1) erhält, wobei
der Speicherteil (26) einen Arbeitsvorgang der Werkzeugmaschine (1) speichert, der der Bedienung des Bedieners in Bezug auf das Bild der Werkzeugmaschine entspricht (1); wobei
das Anzeigeteil (28) konfiguriert ist, ein Bild des Werkstücks (W) anzuzeigen, das auf einem Tisch (16) der Werkzeugmaschine (1) angeordnet ist; wobei
der Inhalt der Bedienung einen Arbeitsvorgang umfasst, bei dem eine Oberfläche des Werkstücks (W) als markierte Oberfläche von einem Bediener ausgewählt wird; wobei
der Informationssteuerungsteil (20) einen Drehwinkel einer Drehvorschubachse (A, C) zum Ausrichten der markierten Oberfläche in eine vorbestimmte Richtung berechnet und einen Bedienungsbefehl zum Bedienen der Werkzeugmaschine (1) entsprechend dem Inhalt der Bedienung erzeugt; wobei
der Bedienungsbefehl einen Befehl zur Drehung entlang der Drehvorschubachse (A, C) auf der Grundlage des berechneten Drehwinkels enthält, und wobei
die Werkzeugmaschine (1) konfiguriert ist, auf der Grundlage des Bedienungsbefehls betreiben zu werden, nachdem eine Beeinträchtigung eines Werkzeugs in Bezug auf das Werkstück (W), ohne die Werkzeugmaschine (1) auf der Grundlage des Bedienungsbefehls anzutreiben, geprüft wurde.

## Revendications

1. Procédé de commande d'une machine-outil (1) qui usine une pièce (W) en déplaçant un outil par rapport à la pièce (W), procédé consistant à :
afficher sur un élément d'affichage (28) une image de la pièce (W) placée sur une table (16) de la machine-outil (1),
enregistrer une opération de la machine-outil (1) correspondant à une opération faite en avance par un opérateur par rapport à l'image de la machine-outil (1),
obtenir le contenu de l'opération de l'opérateur par rapport à l'image de la machine-outil (1), ce contenu de l'opération comprenant une opération dans laquelle une surface de la pièce (W) est choisie comme surface désignée par un opérateur,
calculer un angle de rotation de l'axe d'alimentation en rotation (A, C) pour diriger la surface désignée dans une direction prédéfinie,
générer une commande d'opération pour faire fonctionner la machine-outil (1) selon le contenu de l'opération, la commande d'opération comprenant une commande pour une rotation selon l'axe d'alimentation de rotation (A, C) sur la base de l'angle de rotation calculé, et
faire fonctionner la machine-outil (1) sur la base de la commande d'opération après avoir vérifié l'interférence entre l'outil et la pièce (W) sans entraîner la machine-outil (1) sur la base de la commande d'opération.

2. Procédé de commande de la machine-outil (1) selon la revendication 1,
selon lequel on affiche l'image de la machine-outil (1) sur l'élément d'affichage (28) selon une image tridimensionnelle.

3. Procédé de commande de la machine-outil selon la revendication 1,
selon lequel lorsqu'une partie de l'image de la machine-outil (1) est déplacée en maintenant un état sélectionné de celle-ci par l'opérateur, l'axe d'alimentation (X, Y, Z) et le degré de mouvement correspondant à une direction de mouvement dans l'image de la machine-outil (1) sont fixés, et
on génère l'ordre d'opération sur la base du degré de mouvement selon l'axe d'alimentation (X, Y, Z).

4. Procédé de commande de la machine-outil (1) selon la revendication 1,
selon lequel on affiche une image d'un appareil auxiliaire (33) de la machine-outil (1) sur l'élément d'affichage (28),
le contenu de l'opération est une opération par rapport à l'image de l'appareil auxiliaire (33),
la commande d'opération est une commande pour faire fonctionner l'appareil auxiliaire (33), et
l'appareil auxiliaire (33) fonctionne sur la base de la commande d'opération.

5. Appareil de commande d'une machine-outil (1) qui usine une pièce (W) en déplaçant un outil par rapport à la pièce (W), comprenant :
un élément d'affichage (28) qui affiche une image de la machine-outil (1),
un élément d'enregistrement (26) qui enregistre l'information d'usinage de la machine-outil (1), et
un élément de commande d'information (20) qui commande l'image de la machine-outil (1) affichée sur l'élément d'affichage (28), et on obtient le contenu de l'opération d'un opérateur par rapport à l'image de la machine-outil (1), selon lequel
l'élément d'enregistrement (26) enregistre une opération de la machine-outil (1) correspondant à l'opération de l'opérateur par rapport à l'image de la machine-outil (1),
l'élément d'affichage (28) est configuré pour afficher une image de la pièce (W) disposée sur une table (16) de la machine-outil (1),
le contenu de l'opération comprend une opération dans laquelle une surface de la pièce (W) est sélectionnée comme surface désignée par un opérateur,
l'élément de commande d'information (20) calcule un angle de rotation de l'axe d'alimentation de rotation (A, C) pour diriger la surface désignée dans une direction prédéfinie et générer un ordre d'opération pour le fonctionnement de la machine-outil (1) correspondant au contenu de l'opération,
la commande d'opération comprend un ordre de rotation le long de l'axe d'alimentation en rotation (A, C) sur la base de l'angle de rotation calculée, et
la machine-outil (1) est configurée pour travailler sur la base de la commande d'opération après contrôle de l'interférence entre l'outil et la pièce (W) sans entraîner la machine-outil (1) sur la base de la commande d'opération.
